Europäisches Patentamt

European Patent Office

Office européen des brevets

(19)

(11) **EP 1 315 565 B1**

(12) **FASCICULE DE BREVET EUROPEEN**

(45) Date de publication et mention
de la délivrance du brevet:
**20.10.2004 Bulletin 2004/43**

(51) Int Cl.$^7$: **B01J 45/00**, B01J 20/32,
B01J 47/12, C02F 1/26

(21) Numéro de dépôt: **01965373.2**

(22) Date de dépôt: **29.08.2001**

(86) Numéro de dépôt international:
**PCT/FR2001/002692**

(87) Numéro de publication internationale:
**WO 2002/018050 (07.03.2002 Gazette 2002/10)**

(54) **STRUCTURE COMPLEXANTE, DISPOSITIF ET PROCEDE DE TRAITEMENT D'EFFLUENTS LIQUIDES**

KOMPLEXIERUNGSTRUKTUR, VORRICHTUNG UND VERFAHREN ZUR BEHANDLUNG VON ABWÄSSERN

COMPLEXING STRUCTURE, DEVICE AND METHOD FOR TREATING LIQUID EFFLUENTS

(84) Etats contractants désignés:
**AT BE CH CY DE DK ES FI FR GB GR IE IT LI LU
MC NL PT SE TR**

(30) Priorité: **30.08.2000 FR 0011074**

(43) Date de publication de la demande:
**04.06.2003 Bulletin 2003/23**

(73) Titulaire: **COMMISSARIAT A L'ENERGIE
ATOMIQUE
75752 Paris Cédex 15 (FR)**

(72) Inventeurs:
  • **BUREAU, Christophe**
    **F-92150 Suresnes (FR)**
  • **LEDERF, Franck**
    **F-49100 Angers (FR)**
  • **VIEL, Pascal**
    **F-92190 Meudon (FR)**
  • **DESCOURS, Francis**
    **F-71420 Genelard (FR)**

(74) Mandataire: **Audier, Philippe André et al
Brevatome,
3, rue du Docteur Lancereaux
75008 Paris (FR)**

(56) Documents cités:
**EP-A- 0 049 656       EP-A- 0 431 324
EP-A- 0 611 066       EP-A- 0 992 283
WO-A-85/04480        WO-A-99/62898
US-A- 5 200 041       US-A- 5 372 794
US-A- 5 578 188       US-A- 5 891 574**

• **DATABASE WPI Section Ch, Week 199512
  Derwent Publications Ltd., London, GB; Class
  A14, AN 1995-085443 XP002169630 & JP 07
  010925 A (YAZAKI CORP), 13 janvier 1995
  (1995-01-13)**
• **DATABASE WPI Section Ch, Week 198416
  Derwent Publications Ltd., London, GB; Class
  A14, AN 1984-097334 XP002169631 & JP 59
  042041 A (NITTO ELECTRIC IND CO), 8 mars
  1984 (1984-03-08)**
• **DATABASE WPI Section Ch, Week 200044
  Derwent Publications Ltd., London, GB; Class
  A26, AN 2000-497625 XP002169632 & RU 2 141
  377 C (KARPACHEVA G P), 20 novembre 1999
  (1999-11-20)**
• **LEBRUN C. ET AL: 'Electrosynthesis of
  poly(4-vinylpyridine films ...' SURFACE AND
  COATINGS TECHNOLOGY vol. 100-101, 1998,
  pages 474 - 479**

## Description

### Domaine technique

La présente invention se rapporte à une structure complexante, à un procédé de traitement d'un effluent liquide utilisant ladite structure complexante, et à un dispositif pour la mise en oeuvre du procédé de l'invention.

Les méthodes de traitement de surface, l'industrie nucléaire, le dessalement des eaux saumâtres ou encore la métallurgie des métaux précieux sont producteurs d'effluents comportant des ions toxiques et/ou précieux.

Par exemple dans le secteur automobile l'électrozingage produit des effluents comprenant des métaux ou leur sels tels que Zn, Co, Fe, Cr etc.... Par exemple aussi, et de manière générale, la galvanoplastie et la chimie des métaux usuels tels que Cu, Fe, etc... ou des métaux nobles tels que Au, Pt, etc... ou encore avec la sûreté des installations nucléaires.

En ce qui concerne la sûreté des installations dans le secteur nucléaire, on remédie par exemple à l'incrustation d'ions radioactifs dans les murs par nettoyage des surfaces à posteriori, notamment à l'eau, si bien que ce problème se trouve ramené à celui du traitement d'un effluent liquide dans une unité adéquate.

Que ce soit pour limiter les pertes de la matière première, par exemple les métaux précieux, pour entrer en conformité avec la législation sur les taux de rejet liquides, ou encore pour capter des ions toxiques à des fins de sûreté, la plupart des entreprises qui produisent des effluents liquides sont amenées progressivement à réaliser elles-mêmes le traitement de leurs eaux usées. Ces traitements consistent globalement à extraire les ions des effluents et à essayer de réduire le volume de ces effluents, jusqu'à si possible, qu'ils soient sous forme solide.

Il faut noter que les directives préfectorales tendent, en France comme dans le reste de l'Europe, à abaisser les seuils admissibles de concentration de certains ions métalliques toxiques tels que le cuivre et le chrome, et à limiter la quantité d'eau maximale rejetée, par mètre carré de surface traitée.

Le Ministère Français de l'Environnement projette d'ailleurs actuellement d'orienter la législation vers le "rejet liquide nul", en imposant aux entreprises de ne plus procéder qu'à des rejets solides, la partie liquide du dispositif fonctionnant dès lors en circuit fermé.

### Art antérieur

Les unités de traitement des eaux peuvent comporter plusieurs types de dispositifs permettant de concentrer les ions, selon le débit d'effluents à traiter, la concentration des ions dans l'effluent, etc... Que cette concentration soit obtenue par électrodialyse, osmose inverse ou encore évaporation, elle aboutit systématiquement à la production d'autres solutions contenant des ions. Il s'agit de solutions soit plus concentrées, soit moins concentrées que les effluents d'entrée, mais ne répondant en général pas aux directives et aux objectifs actuellement visés en matière de rejet zéro.

Divers dispositifs peuvent être utilisés en complément pour le traitement des ions :

Par exemple,

- une unité "de précipitation" : les solutions brutes arrivent à l'entrée de la cuve et sont traitées en milieu très basique par exemple à chaud et/ou avec de la soude, de façon à forcer la précipitation des hydroxydes et/ou des carbonates des sels métalliques présents. Les boues obtenues sont alors essorées par exemple au moyen de filtres-presses. Les concentrations résiduelles des cations présents dans les éluats sont fonction des produits de solubilité des hydroxydes et carbonates qui ont précipité dans les boues et sont donc variables suivant la nature chimique des ions. On peut cependant estimer que la somme de ces concentrations est de l'ordre de quelques dizaines à une centaine de mg/l, c'est à dire bien au-delà des concentrations seuil admises actuellement, qui avoisinent le mg/l ou la fraction de mg/l;

- une unité de filtration permettant d'atteindre les basses et très basses concentrations : l'un des dispositifs les plus utilisés actuellement est celui des résines échangeuses d'ions. Il s'agit de matériaux polymères, le plus souvent conditionnés sous forme de cartouches au travers desquelles passe le liquide à purifier, fonctionnalisés pour capter les cations de la solution et les remplacer par d'autres ions non toxiques, en général des alcalins tels que le sodium Na$^+$. La solution obtenue à la sortie des résines échangeuses d'ions est en général, après ré-ajustement éventuel du pH, conforme aux seuils fixés par la législation. Une fois saturées, les cartouches peuvent être soit jetées et remplacées par des cartouches neuves soit démontées, régénérées à l'aide de solutions tels que par exemple des solutions acides, des solutions concentrées en sodium, etc... pour décrocher les ions qui ont été captés. Les cartouches régénérées peuvent être réutilisées jusqu'à concurrence de quelques dizaines de cycles le plus souvent. Dans le cas où les cartouches sont régénérées, on distingue encore les situations où la régénération s'effectue localement, avec un matériel minimum, et celles où les cartouches sont retournées chez le fabricant pour régénération. La régénération typique d'une résine échangeuse de cations, basée sur des groupements carboxylate ou sulfonate greffés sur le polymère, comporte les étapes suivantes : (i) lavage à l'eau ; (ii) lavage acide, éventuellement cyclique, pour décrocher les cations métalliques de la résine ; (iii) rinçage à l'eau ; (iv) nettoyage à la soude, pour ré-acidifier la résine et remplacer les protons par des ions sodium; (v) rinçage à l'eau pour restratifier la résine et éliminer la soude en excès.

Ces deux dispositifs ne sont pas équivalents. La précipitation reste un dispositif rustique permettant de "faire le plus gros" du travail de récupération des ions, mais ne permet pas de descendre à des concentrations suffisamment basses pour être admissibles.

Les résines échangeuses d'ions permettent au contraire de descendre à des concentrations basses, voire très basses, mais ne peuvent travailler efficacement que sur des effluents déjà partiellement traités, par précipitation par exemple.

Ils ne sont donc pas toujours d'une efficacité suffisante à eux seuls.

Il peut être noté que dans le cas particulier des effluents radioactifs issus du retraitement des déchets de l'industrie nucléaire, l'extraction liquide-liquide est le plus souvent préférée à la précipitation. La précipitation produit des déchets solides de trop gros volume, le plus souvent incalcinables, et entraîne un certain nombre d'ions autres que ceux qui doivent être séparés, ce qui est gênant dans un domaine où la séparation est un objectif au moins aussi important que la simple récupération.

Même si les dispositifs à base de résines échangeuses d'ions sont parmi les plus utilisés aujourd'hui dans le domaine industriel, ils présentent donc un certain nombre de points faibles.

En effet, leur action consiste à effectuer de l'échange d'ion, comme leur nom l'indique, donc à remplacer un cation gênant par un autre qui l'est moins. En sortie, les solutions "désionisées" sont en fait fortement concentrées en sodium, grossièrement au prorata des concentrations en ions gênants présents à l'entrée. Les sels de sodium ayant en général des produits de solubilité très bas, ces eaux sont cependant adéquates pour la plupart des bouilleurs, même si leur salinité reste élevée.

De plus, intrinsèquement, le principe de fonctionnement des cartouches de résines échangeuses d'ions n'est pas adapté au continu. L'ingénierie permet d'y remédier en disposant de plusieurs cartouches, utilisées séquentiellement jusqu'à saturation, avant que la suivante ne prenne le relais. Les capacités de traitement des cartouches restent toutefois limitées notamment par leur taille, par la densité volumique de groupements échangeurs, etc... Le dimensionnement d'une installation est donc étroitement lié, voir homothétique, au débit prévu pour l'installation.

Un des avantages de l'extraction liquide-liquide est sa simplicité de mise en oeuvre, mais ce dispositif reste tributaire d'un certain nombre de contraintes qui sont importantes.

Ainsi, les deux phases liquides sont, le plus souvent, choisies pour leur non miscibilité. Mais là n'est pas le seul critère : il faut également que les ions séquestrés par les agents de complexation moléculaires soient plus solubles dans la phase extractante que dans la phase extraite. Ce résultat est obtenu au prix de l'élaboration de structures moléculaires complexantes relativement compliquées, qui ne sont parfois adaptées qu'à un seul type d'ion.

En outre, les ions radioactifs étant le plus souvent des cations, les structures moléculaires complexantes utilisées dans l'extraction liquide-liquide ayant été à l'origine des structures électriquement neutres, une contrainte supplémentaire a longtemps été la co-extraction du contre-ion assurant la neutralité électrique globale de la structure extraite, ne serait-ce que d'un point de vue cinétique, si bien que l'ingénierie moléculaire afférente au procédé d'extraction liquide-liquide porte autant sur la structure complexante que sur la fabrication de contre-ions spécifiques. Toutefois l'émergence de solutions "tout-en-un" peut être notée, où l'on fixe directement sur la structure complexante des bras moléculaires portant des fonctions carboxylates servant de contre-ion local. Ces tentatives ramènent cependant le procédé à nouveau vers le concept d'échange d'ions, et rendent plus complexe encore la partie de fabrication des matières premières permettant l'extraction.

Il apparaît donc un grand besoin de développer de nouvelles structures ne présentant pas les inconvénients précités et permettant de traiter efficacement des effluents de manière à en extraire des ions par exemple parce qu'ils sont indésirables, tels que les ions toxiques précités, ou parce qu'ils sont précieux ou nobles.

## Exposé de l'invention

La présente invention a précisément pour but de fournir une telle structure complexante palliant les inconvénients précités et utile dans toutes les applications précitées.

La structure de la présente invention est caractérisée en ce qu'elle comprend un substrat conducteur ou semiconducteur sur lequel est greffé, de façon covalente par électropolymérisation, un film isolant électrique d'un polymère, ou d'un copolymère organique, l'électropolymérisation pour greffer le film ayant été réalisée en présence d'un agent réticulant ajouté, ledit film comprenant une ou plusieurs cavité (s) complexante (s) de type verrous redox, ladite structure étant capable de complexer des ions puis de les expulser par voie électrochimique au moyen desdites cavités complexantes.

Selon l'invention, le polymère ou copolymère organique électriquement neutre greffé sur le substrat: peut comprendre par exemple un ou plusieurs groupe(s) fonctionnel(s) identique(s) ou différent(s) présentant des propriétés complexantes choisi(s) parmi les amines, les amides, les éthers, les carbonyles, les phosphines, les oxydes de phosphines, les thio-éthers, les disulfures, les urées, les éther-couronnes, les aza-couronnes, les thio-couronnes, les cryptands, les sépulcrands, les podands, les porphyrines, les calixarènes, les pyridines, les bipyridines, les terpyridines, les quinoléines, les composés de l'orthophénantroline, les naphtols, les iso-naphtols, les thiourées, les sidérophores, les antibiotiques, l'éthylène glycol, les cyclodextrines, ainsi que les structures moléculaires substituées et/ou fonctionnalisées à partir de ces groupes fonctionnels, et/ou une ou plusieurs cavité(s) complexante(s) de type verrous redox.

Selon l'invention, le polymère peut être par exemple un polymère comprenant un monomère choisi parmi la 4-vinyl pyridine, la vinyle bipyridine, le thiophène.

Selon l'invention, le film de polymère ou de copolymère organique a de préférence une épaisseur inférieure ou égale à environ 10 μm.

Par exemple, le film de polymère ou de copolymère organique peut être un copolymère du méthyle méthacrylate et du méthyle méthacrylate dans lequel le groupement méthyle de l'ester a été remplacé par un éther couronne muni d'un verrou redox ou un copolymère de la 4-vinyl pyridine et de vinyle ferrocène ou de vinyle diferrocène.

Selon l'invention le substrat peut avoir différentes formes, qui peuvent par exemple être adaptées à l'utilisation à laquelle est destinée la structure de l'invention, c'est à dire au type de procédé de traitement d'un effluent selon la présente invention choisi. Il peut par exemple être choisi parmi une plaque, une lame, un ruban, une toile, une grille, un fil, une bille, une poudre, un copeau, un tube, etc...

Le substrat peut être constitué en tout ou partie d'un matériau conducteur ou semi-conducteur. Lorsqu'il est en partie constitué d'un matériau conducteur ou semi-conducteur, ce matériau peut être en surface.

Le substrat peut être constitué d'un matériau choisi suivant l'utilisation à laquelle est destinée la structure de l'invention, c'est à dire par exemple au type de procédé choisi pour le traitement d'un effluent selon la présente invention. Il peut en effet être nécessaire qu'il résiste à des conditions de traitement drastiques par exemple à des pH acides ou basiques et/ou à des températures élevées. Ce matériau peut être par exemple un matériau organique, ou minéral tel que du verre ou du métal.

Par exemple, le substrat peut être sous la forme d'une toile métallique ou d'une grille, par exemple en inox 316L.

L'invention se rapporte également à un procédé de traitement d'un effluent liquide pour en extraire des ions, ledit procédé comprenant une étape de mise en contact de l'effluent à traiter avec une structure selon la présente invention de manière à ce que les ions à extraire soient complexés par ledit film de polymère organique électriquement neutre.

Selon l'invention, dans un premier exemple de réalisation, l'étape de mise en contact peut être réalisée par trempage de la structure complexante dans l'effluent à traiter. Dans ce cas, le procédé de l'invention peut comprendre en outre une étape dans laquelle la structure complexante sur laquelle sont complexés les ions à extraire de l'effluent est retirée de l'effluent traité.

Selon l'invention, dans un deuxième exemple de réalisation, l'étape de mise en contact peut être réalisée par passage de l'effluent à traiter sur ou à travers la structure complexante de la présente invention. Par exemple, l'effluent peut être mis en circulation dans une ou plusieurs cartouches dans lesquelles sont disposées une ou des structure(s) complexante(s) selon l'invention. Par exemple aussi, le substrat peut être une surface interne d'un conduit sur laquelle est greffé le film organique complexant selon l'invention. Dans cet exemple, la mise en contact peut être faite par mise en circulation de l'effluent à traiter dans le conduit.

Le procédé de la présente invention peut comprendre en outre une étape d'expulsion des ions complexés par le polymère, ladite expulsion pouvant être réalisée par exemple par voie chimique ou par voie électro-assistée. La voie chimique peut être réalisée par exemple par trempage de la structure complexante dans une ou plusieurs solution(s) de décomplexation, ou par mise en circulation d'une ou de plusieurs solution(s) de décomplexation sur la structure de la présente invention.

Selon une variante de la présente invention, le procédé peut comprendre, en remplacement ou en complément de l'étape d'expulsion précitée, une étape de pelage du substrat pour en retirer le film de polymère ayant complexé les ions, suivie éventuellement d'une étape de dépôt d'un nouveau film de polymère sur le substrat.

Selon l'invention, l'expulsion des ions complexés étant réalisée par voie chimique, elle peut être réalisée par exemple par trempage du film de polymère organique dans une solution comprenant un ligand ayant une forte affinité pour les ions complexés par le film.

Par exemple, le film étant un film de poly-4-vinyl pyridine, les ions à extraire de l'effluent étant des ions du cuivre et/ou du zinc, l'expulsion de ces derniers du film peut être réalisée par une méthode utilisant de l'eau chaude, par une méthode utilisant des solutions d'ammoniac ou par une combinaison de ces deux méthodes.

Par exemple, le substrat étant un substrat conducteur ou semi-conducteur, le polymère organique greffé sur le substrat comprenant une ou plusieurs cavité(s) complexante(s) munies de verrous redox, l'expulsion des ions complexés peut être réalisée par exemple par voie électro-assistée en polarisant électriquement le substrat conducteur ou semi-conducteur qui supporte le film de polymère.

La présente invention se rapporte également à un dispositif de traitement en continu d'un effluent à traiter comprenant :

- une structure complexante selon la présente invention,
- un premier conteneur destiné à contenir l'effluent à traiter dans lequel se trouvent des ions à extraire,
- un deuxième conteneur destiné à contenir une solution d'expulsion des ions complexés par le polymère de ladite structure, et
- un moyen pour faire passer en continu, à une vitesse commandée, ladite structure successivement dans le premier conteneur contenant l'effluent à traiter puis dans le deuxième conteneur contenant la solution d'expulsion des ions complexés par le polymère de la structure complexante.

Selon l'invention, dans le dispositif, le substrat de la structure peut être par exemple un ruban refermé sur lui-même ou une grille. Dans le cas d'un substrat sous la forme d'une grille, la structure peut être placée par exemple dans des godets dans un système de noria. Dans ce cas, la structure complexante est un ensemble de grilles disposées dans des godets, lesdits godets étant entraînés par un système de noria.

Selon l'invention, le dispositif peut comprendre en outre un moyen de commande, permettant d'ajuster la vitesse de passage de la structure dans le premier conteneur contenant l'effluent à traiter puis dans le deuxième conteneur en fonction par exemple d'un débit de l'effluent à traiter et/ou d'une concentration des ions dans l'effluent à traiter, et/ou en fonction de la vitesse de complexation et de décomplexation des ions par le film organique.

Ce moyen peut être par exemple un moyen de commande de la vitesse de passage d'un ruban refermé sur lui-même ou un moyen de commande de la vitesse de passage de la noria entraînant les godets.

Selon un autre mode de réalisation, la présente invention se rapporte aussi à un dispositif de traitement en continu d'un effluent à traiter comprenant :

- une structure complexante selon la présente invention,
- un premier conteneur destiné à contenir l'effluent à traiter dans lequel se trouvent des ions à extraire, et
- un moyen pour faire passer en continu, à une vitesse commandée et à partir du premier conteneur, l'effluent à traiter à la surface de ou à travers ladite structure complexante contenant l'effluent à traiter.

Ce dispositif peut comprendre en outre un deuxième conteneur destiné à contenir une solution d'expulsion des ions complexés par la structure de la présente invention, ainsi qu'un moyen pour faire passer en continu, à une vitesse commandée et à partir dudit deuxième conteneur, la solution d'expulsion des ions complexés à la surface de ou à travers ladite structure complexante pour la régénérer.

Dans ce dispositif, une structure complexante selon l'invention peut être disposée par exemple dans une seule cartouche ou dans plusieurs cartouches identiques ou différentes. Différentes structures complexantes selon l'invention peuvent également être utilisées dans différentes cartouches. Les cartouches peuvent rester fixes, et l'effluent et la solution d'expulsion peuvent passer à la surface ou à travers la structure.

## Exposé détaillé de la présente invention

La présente invention se rapporte notamment à une structure complexante et à un procédé utilisant ladite structure. Elle se rapporte à une complexation de surface. La structure comprend un substrat et un revêtement organique déposé en film, de préférence mince. Le revêtement est un polymère qui est capable de complexer des ions, en particulier des cations : contrairement aux résines échangeuses d'ions, la complexation s'effectue sur un volume de matière très réduit, égal au produit de l'aire de la surface traitée par l'épaisseur du film de polymère qui a été déposé. Les épaisseurs considérées sont en général inférieures ou égales à la dizaine de micromètres. De façon à augmenter la quantité de polymère présente par unité de surface, le polymère peut par exemple être déposé sur des surfaces divisées de substrats : toiles, grilles fines, billes, copeaux, poudres, etc...

En utilisant par exemple des grilles en inox, en faisant varier le nombre de fils par unité de surface, par exemple 2,54 cm (1 pouce), on dispose d'un objet pouvant comporter une surface réelle de quelques dizaines de cm$^2$ par cm$^2$ de toile.

Un certain nombre d'avantages liés à l'utilisation d'un film mince selon l'invention sont exposés ci-après.

Le matériau complexant est solidarisé sur un support, le substrat, et peut donc être facilement manipulé de façon mécanique par exemple pelé, trempé, extrait, rincé, etc... Il permet par exemple d'éviter les problèmes de solubilité différentielle inhérents au transfert de phase dans l'extraction liquide-liquide ou encore ceux liés à la filtration dans les résines échangeuses d'ions. Le progrès réalisé en termes de manipulation de la substance complexante est à l'analogue de celui obtenu voilà quelques décennies lorsque l'on est passé de la catalyse homogène ou de la catalyse par transfert de phase, à la catalyse hétérogène. Au vu de ce qui précède, le fait d'éliminer le problème de l'extraction et de la co-extraction du contre-ion, comme dans le cas de l'extraction liquide-liquide, permet de travailler avec des structures extractantes électriquement neutres, et donc de ne pas revenir à une tactique de type "échange d'ions". C'est ce qui est exposé aux paragraphes suivants.

Dans le cas de l'utilisation d'un substrat en ruban selon l'invention, le volume de polymère complexant peut être faible sur le ruban du fait de la faible épaisseur du film, l'imprégnation du polymère à la fois par la solution à traiter, ou solution à purifier, et par la solution de régénération du film, lors de l'étape d'expulsion des ions, est rapide. En clair, le temps de complexation et le temps de décomplexation sont courts, ce qui permet de construire un système défilant de type de ruban revêtu de polymère complexant, où l'on oppose une zone de complexation vierge à la solution à traiter, et où la vitesse de défilement du ruban est un paramètre ajustable permettant de répondre à des débits variables et/ou à des variations de concentrations d'ions polluants par exemple en asservissant la vitesse de défilement à une mesure de débit ou de concentration. En cela, le dispositif de la présente invention, basé sur l'utilisation de films minces complexants greffés sur des surfaces de substrats, est à même de répondre à toute une gamme de débits sans devoir être modifié, contrairement aux systèmes actuels où le volume de résine est homothétique du débit.

Il permet, dans le cas de grilles par exemple, la fabrication d'un dispositif pouvant fonctionner en continu : par exemple au moyen d'un ruban réalisé à partir de ces grilles, et recouvert du polymère complexant. Ce ruban, refermé sur lui-même, peut tremper à un endroit dans la solution à purifier, et, plus loin, dans la solution de régénération qui réalisera la décomplexation avant de revenir dans la solution à purifier.

Alors qu'il est nécessaire, pour la résine échangeuse d'ions, d'utiliser un volume minimal de solution de régénération, correspondant au volume nécessaire pour mouiller toute la résine, le volume pour expulser les ions du ruban et le régénérer selon l'invention est quasiment nul : il suffit d'un petit volume, dans lequel on vient tremper le ruban, centimètre par centimètre. La longueur de trempage peut en fait être dictée que par la vitesse de décomplexation et le rythme de défilement du ruban. Le procédé utilisant la présente invention permet des gains importants sur le rapport entre le volume des effluents traités et le volume des solutions de récupération par rapport aux procédés utilisant des résines échangeuses d'ions.

La présente invention s'applique également à la capture de molécules organiques polluantes par des films greffés. Il s'agit d'un autre mode de réalisation de la présente invention, puisque seule la structure chimique du monomère qui est utilisé pour fabriquer le film de polymère est modifiée.

La structure de la présente invention permet la complexation et l'expulsion, et non pas l'échange d'ions. Il s'agit d'une complexation par des structures électriquement neutres.

Les films polymères utilisés selon l'invention sont obtenus à partir de monomères ou de co-monomères électriquement neutres, susceptibles de capter les ions par formation de liaisons datives.

Les monomères utilisés pour réaliser les films complexants de la présente invention se définissent notamment selon les fonctionnalités désirées dans le film de polymère greffé sur le substrat, à l'état final. Ces monomères comprennent de préférence deux au moins des fonctionnalités suivantes : (i) capacité à polymériser ou à co-polymériser ; (ii) capacité à véhiculer un groupement fonctionnel ou une structure moléculaire complexante ; (iii) capacité à véhiculer un groupement fonctionnel ou une structure moléculaire expulsante.

Les monomères considérés peuvent être schématiquement constitués des trois fonctionnalités potentielles ou "modules" distincts suivants :

Un module assurant la réaction de polymérisation : ce module est en général constitué d'un groupement fonctionnel insaturé, par exemple une double liaison, un ensemble de doubles liaisons conjuguées ou un cycle insaturé, et d'un groupement électro-attracteur ou électro-donneur permettant l'activation électronique du groupement insaturé qui polymérise. Pour une électropolymérisation cathodique, il peut s'agir de monomères vinyliques entièrement aprotiques où le carbone vinylique est électrophile, par exemple un polymère vinylique isolant, par exemple la 4-vinyl pyridine tel que décrit dans C. Lebrun, G. Deniau, P. Viel, G. Lécayon, Surface Coatings Technology, **100-101,** 474 (1998), 2-vinyl pyridine, acrylonitrile tel que décrits dans G. Deniau, G. Lécayon, P. Viel, G. Hennico, J. Delhalle, Langmuir, **8**, 267 (1992), acrylate d'éthyl, méthacrylate de méthyl tel que décrits dans le brevet français n°98 14351 du 16 novembre 1998, etc... ; pour l'électropolymérisation anodique, de monomères vinyliques à la demande inverse, où le carbone vinylique est nucléophile (polymères vinyliques isolants : N-vinyl pyrrolidone tel que décrit dans E. Léonard-Stibbe, G. Lécayon, G. Deniau, P. Viel, M. Defranceschi, G. Legeay, J. Delhalle, Journal of Polymer Science A, **32,** 1551 (1994) ou de monomères conjugués tels que des polymères conducteurs : thiophène, aniline, pyrrole, etc. Pour la polymérisation par voie chimique, il peut s'agir de tout type de polymère, qu'il soit obtenu par voie cationique, anionique ou radicalaire, par exemple le polyéthylène glycol, tel que décrit dans K. Gogova, I. Zuskova, E. Tesarova, B. Gas, Journal of Chromatography A., **838**, 101 (1999). Il est à noter que ce module de polymérisation peut disposer lui-même de propriétés complexantes (4-vinyl pyridine telles que décrites dans C. Lebrun, G. Deniau, P. Viel, G. Lécayon, Surface Coatings Technology, **100-101,** 474 (1998), 2-vinyl pyridine, éthylène-imine tel que décrit dans A.I. Kokorin, A.A. Pridantsev, Zhurnal Fizicheskoi Khimii, **71,** 2171 (1997) et E.A. Osipova, V.E. Sladkov, A.I. Kamenev, V.M. Shkinev, K.E. Geckeler, Analytica Chemica Acta, **404,** 231 (2000), N-vinyl pyrrolidone tel que décrit dans E. Léonard-Stibbe, G. Lécayon, G. Deniau, P. Viel, M. Defranceschi, G. Legeay, J. Delhalle, Journal of Polymer Science A, **32,** 1551 (1994) ou non par exemple l'acrylonitrile, le méthacrylonitrile, le méthyl qui peut être destiné à être fonctionnalisé par une structure complexante a posteriori, ou comme co-monomère de structure avec un autre monomère, fonctionnalisé ou non, ayant lui-même des fonctions complexantes.

Un groupement fonctionnel présentant des propriétés complexantes par exemple vis-à-vis des cations d'intérêt. Il peut s'agir de toutes les structures moléculaires neutres permettant la complexation des cations, c'est-à-dire de structures présentant des doublets libres, donc contenant des atomes d'azote non quaternisés, des atomes de soufre ou des atomes d'oxygène. Entrent par exemple dans cette liste, les amines, les amides, les éther-couronnes tels que ceux décrits dans (a) E. Simunicova, D. Kaniansky, K. Korsikova, Journal of Chromatography A, **665,** 203 (1994), (b) Y.C. Shi, J.S. Fritz, Ibid., **671,** 429 (1994), les aza-couronnes, les thio-couronnes, les cryptands, les sépulcrands, les podands, les porphyrines telles que celles décrites dans A.V. Udal'tsov, A.A. Churin, K.N. Timofeev, Y. V. Kovalev, Biokhimiya (Moscow), **64,** 949 (1999), les calixarènes, les pyridines telles que celles décrites dans C. Lebrun, G. Deniau, P. Viel, G. Lécayon, Surface Coatings Technology, **100-101,** 474 (1998); les bipyridines, les quinoléines, les composés de l'orthophénanthroline, les naphtols, les iso-naphtols, les thiourées tels que ceux décrits dans A.V. Udal'tsov, A.A. Churin, K.N. Timofeev, Y.V. Kovalev, Biokhimiya (Moscow), **64,** 949 (1999), les sidérophores naturels : entérobactine, desferrichrome, desferrioxammine B, etc... ou synthétiques : N, N-bis (2-hydroxyéthyl) glycine, 2,3-dihydroxy benzoylglycine, acide benzhydroxamique, etc..., les antibiotiques, l'éthylène glycol, les cyclodextrines telles que celles décrites dans J.F. Bergamini, M. Belabbas, M. Jouini, S. Aeiyach, J.C. Lacroix, K.I. Chane-Ching, P.C. Lacaze, Journal of Electroanalytical Chemistry, **482,** 156 (2000), ainsi que les structures moléculaires substituées et/ou fonctionnalisées à partir de ces structures.

Un groupement fonctionnel assurant l'expulsion de l'ion complexé, de manière à régénérer à façon le site de capture. De tels "verrous moléculaires" sont par exemple décrits dans (a) P.L. Boulas, M. Gomez-Kaifer, L. Echegoyen, Angewandte Chemie, International Edition in English, **37,** 216 (1998); (b) A.E. Kaifer, S. Mendoza, in Comprehensive Supra-Molecular Chemistry, Vol. 1, Eds. J.L. Atwood, J.E. Davies, D.D. MacNicol, F. Vögtle, Pergamon, Oxford (1996), pp. 701-732; (c) P.D. Beer, P.A. Gale, G.Z. Chen, Coordination Chemistry Review, **185-186,** 3 (1999) ; (d) H. Plenio, D. Burth, Organometallics, **15,** 1151 (1996) ; (e) P.D. Beer, K.Y. Wild, Polyhedron, **15(18),** 775 (1996). Ces composés, appelés aussi "verrous redox", sont utilisés pour réaliser des cavités de complexation auto-régénérables, pilotables par électrochimie, et peuvent être utilisés comme modules de base pour des capteurs électrochimiques ultra-sélectifs et ultra-sensibles d'ions en solution. Les inventeurs préconisent ici leur utilisation non pas à des fins analytiques mais à des fins de production de sites de complexation et d'expulsion auto-régénérables, pour le traitement des effluents liquides.

Il est à noter que certains monomères neutres non fonctionnalisés, c'est-à-dire ne comportant que le "module" de polymérisation, peuvent avoir des propriétés complexantes intrinsèques. C'est par exemple le cas de la 4-vinyl pyridine telle que décrite dans C. Lebrun, G. Deniau, P. Viel, G. Lécayon, Surface Coatings Technology, **100-101**, 474 (1998), de la 2-vinyl pyridine, de la vinyl bipyridine, du thiophène, etc... Il n'est alors pas indispensable de les équiper d'une fonctionnalité de complexation supplémentaire.

Globalement, les polymères susceptibles d'intervenir dans la présente invention sont donc ceux obtenus à partir soit des monomères ci-dessus non fonct:ionnalisés, soit des monomères fonctionnalisés, soit d'un mélange, copolymère, de monomères fonctionnalisés avec des monomères non fonctionnalisés. Le polymère ou le co-polymère obtenu peut être lui-même éventuellement fonctionnalisé a posteriori, par voie chimique par exemple, par exemple pour déprotéger des fonctions qui avaient dû être protégées au moment de la polymérisation : silylation des OH pour une électropolymérisation anionique, etc...

La fonctionnalisation peut avoir lieu sur les monomères et/ou co-monomères avant synthèse du monomère et/ou co-monomère, ou par réaction chimique sur le polymère ou le copolymère déjà formé.

Contrairement au cas des résines échangeuses d'ions, les groupes pendants de ces polymères ou copolymères neutres existent à l'état libre. En effet, dans le cas des résines échangeuses d'ions, les groupements qui captent les cations sont chargés électriquement : il s'agit le plus souvent de groupements carboxyliques (COO⁻) ou sulfonates ($SO_3^-$) pour les cations, et de groupements ammonium ($-NH_3^+$) pour les anions, qui ne peuvent pas exister à l'état libre, et sont donc toujours accompagnés d'un contre-ion : soit les ions de régénération, sodium par exemple pour les résines à cations, soit les ions indésirables présents dans la solution.

Dans le cas de la présente invention, l'ensemble du polymère doit être électriquement neutre. Les ions indésirables sont captés par le polymère complexant et emportent leur contre-ion avec eux, mais ne sont pas remplacés par un autre ion. Il s'agit donc de capture d'ion et non pas d'échange : les ions captés par le polymère complexant peuvent être ensuite expulsés du polymère, par divers moyens décrits ci-après, dans un volume très réduit, où les ions indésirables se concentrent.

L'expulsion peut être réalisée par voies chimiques ou par voies électro-assistée.

Plusieurs méthodes peuvent donc être envisagées pour l'expulsion des ions du polymère complexant, une fois qu'ils y ont été captés.

Par la voie chimique : le film de polymère trempe dans une solution contenant un ligand ayant une très forte affinité pour les ions complexés dans le film. Dans le cas d'un film de poly-4-vinyl pyridine par exemple, les cations du cuivre ou du zinc peuvent être très facilement expulsés du film par exemple par un traitement à l'eau chaude, par des solutions d'ammoniac ($NH_3$), ou par une combinaison des deux méthodes. Comme il est expliqué dans les exemples d'application ci-dessous, les ions du cuivre sont de moins en moins bien expulsés à mesure que la solution de récupération est concentrée en ions du cuivre. Il existe une concentration seuil au-delà de laquelle les ions ne peuvent plus être expulsés du film de polymère. On a évidemment avantage à faire en sorte que cette concentration soit la plus élevée possible, ce qui permet d'augmenter la valeur du rapport entre le volume d'effluents traité et le volume de la solution de rejet correspondante. Même si cette voie chimique utilise une solution de relargage analogue à celle des autres techniques citées plus haut, les volumes dont elle a besoin sont intrinsèquement beaucoup moins importants que ceux d'une résine échangeuse d'ions.

Par exemple dans le procédé de la présente invention qui utilise un ruban recouvert d'une couche de polymère complexant, alors qu'il faut pour la résine échangeuse d'ions un volume minimal de solution régénératrice, correspondant au volume nécessaire pour mouiller toute la résine, le volume irréductible pour expulser les ions du ruban et le régénérer est quasiment nul : dans les faits, un petit volume peut suffire, dans lequel on vient tremper le ruban, centimètre par centimètre. La longueur de trempage n'est en fait dictée que par la vitesse de décomplexation et le rythme de défilement du ruban.

Par la voie électrochimique : on peut par exemple réaliser préalablement un film de co-polymère greffé où le monomère de structure est par exemple le méthyl méthacrylate (MMA), et le monomère fonctionnalisé est un MMA où le groupement méthyl de l'ester a été remplacé par un éther-couronne muni de son verrou rédox. Le principe est simple : le verrou est un groupement fonctionnel oxydable ou réductible, donc possédant au moins un potentiel rédox ($E°$). Il est lié par liaison(s) covalente(s) à la cavité complexante, un éther-couronne par exemple, de façon à ce que la distance verrou/centre de la cavité soit de quelques Angströms.

Dans l'exemple d'un verrou oxydable, neutre à l'état réduit, chargé positivement à l'état oxydé : à l'état réduit ($E<E°$), la cavité complexante est "ouverte" et peut capter un cation. Une fois la complexation effectuée, le verrou rédox ($E>E°$) est oxydé : le verrou se charge positivement, et force donc l'expulsion du cation se trouvant dans la cavité, par répulsion électrostatique verrou-oxydé/cation. Tant que le verrou est chargé positivement c'est-à-dire se trouve sous sa forme oxydée, la cavité complexante est "fermée", et ne peut recapter de nouvel ion. Une fois le cation expulsé, il est possible de repasser à la forme réduite du verrou ($E<E°$) pour le rendre à nouveau neutre électriquement et autoriser la cavité à complexer à nouveau. Dans le cadre de la présente invention, on peut avantageusement profiter du fait que le polymère complexant est un film mince greffé sur une surface : si l'on utilise une surface métallique, alors il devient simple de piloter l'état d'oxydation des verrous, en polarisant électriquement la surface métallique qui supporte le film de polymère complexant. Il suffit ainsi d'imposer l'ouverture des cavités ($E<E°$) lors du passage du ruban dans le bain de complexation, et leur fermeture avec expulsion dans le bain de relargage ($E>E°$). Dans un tel procédé, on parvient ainsi à réaliser l'expulsion sans utilisation de quelque réactif chimique que ce soit.

Le même type de résultat peut être obtenu en réalisant un co-polymère où les fonctions de complexation et les fonctions expulsantes sont séparées, c'est-à-dire sont portées par des molécules co-monomères différentes. On peut par exemple réaliser un film en co-polymérisant la 4-vinyl pyridine, fonction complexante avec le vinyl ferrocène ou le vinyl diferrocène, fonction d'expulsion. Plusieurs cycles pyridiniques étant nécessaires à la complexation d'un cation, il faut ajuster la concentration relative des deux co-monomères pour équilibrer le rapport entre fonctions complexantes et fonctions expulsantes. Il est possible de réaliser l'association de tous les monomères portant une fonctionnalité complexante qui ont été précédemment cités avec tout groupement rédox existant sous une forme chargée "n+" à l'état oxydé, et sous forme neutre à l'état réduit, cations, ou bien sous forme neutre à l'état oxydé et chargée "n-" à l'état réduit, anions. Si l'on utilise par exemple le vinyl 18-couronne-6 comme monomère complexant et le vinyl ferrocène comme monomère expulsant, alors il peut être nécessaire d'utiliser un terco-monomère de structure, comme la vinyl pyridine ou l'acrylonitrile par exemple, pour favoriser la cinétique de polymérisation et la construction du film. En effet, le vinyl 18-couronne-6 et le vinyl ferrocène ayant des groupements pendants volumineux, la cinétique de polymérisation peut être lente s'ils sont utilisés seuls. Une partie de ces aspects de synthèse par copolymérisation sont repris dans les exemples d'application ci-dessous.

Le même type de raisonnement s'applique à l'utilisation des cavités supra-moléculaires permettant la capture des anions comme décrit dans (a) P.D. Beer, S.W. Dent, N.C. Fletcher, T.J. Wear, Polyhedron, **15(18),** 2983 (1996); (b) P.D. Beer, A.R. Graydon, A.O.M. Johnson, D.K. Smith, Inorganic Chemistry, **36,** 2112 (1997); (c) J.E. Kingston, L. Ashford, P.D. Beer, M.G.B. Drew, Journal of the Chemical Society, Dalton Transactions, 251 (1999) ; (d) P.D. Beer, Accounts on Chemical Research, **31**, 71, (1998) ; (e) V.B. Arion, P.D. Beer, M.G.B. Drew, P. Hopkins, Polyhedron, **18,** 451 (1999). La littérature mentionne leurs performances à des fins analytiques, pour la détection d'anions en très faibles quantités. Dans le cadre de la présente invention, les inventeurs préconisent leur emploi dans le but de séquestrer et d'expulser de façon sélective des anions indésirables tels que des chromates, nitrates, etc..., en les solidarisant d'un film de polymère greffé chimiquement sur une surface.

Le même raisonnement peut être appliqué à l'utilisation de cavités supra-moléculaires permettant la capture de molécules organiques plus complexes que les seuls ions minéraux. Il est donc possible de réaliser des films greffés dont le monomère, ou l'un des co-monomères, de base est constitué d'un MMA fonctionnalisé par une molécule de cyclodextrine tel que décrit dans J.F. Bergamini, M. Belabbas, M. Jouini, S. Aeiyach, J.C. Lacroix, K.I. Chane-Ching, P.C. Lacaze, Journal of Electroanalytical Chemistry, **482,** 156 (2000), ainsi que les structures moléculaires substituées et/ou fonctionnalisées à partir de ces structures, par exemple.

D'autres caractéristiques et avantages de la présente invention apparaîtront encore à la lecture des exemples qui suivent et des figures en annexe.

**Brève description des figures**

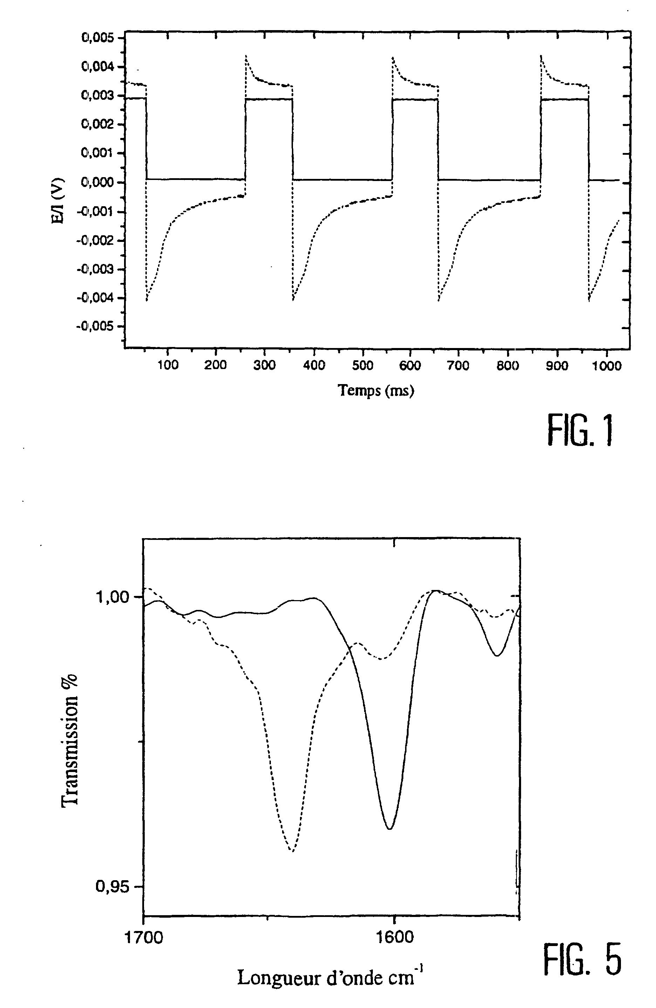

- La figure 1 est un enregistrement obtenu au moyen d'un oscilloscope au cours d'une synthèse d'un film de P4VP par éléctropolymérisation sur une surface d'une lame de verre métallisée,

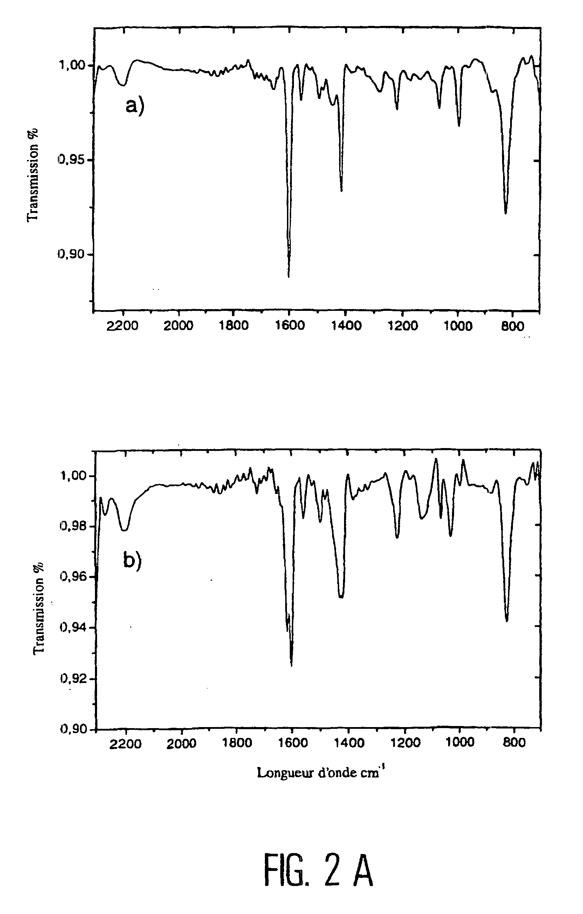

- La figure 2 A représente deux spectres globaux avant, sur la figure du haut a), et après , sur la figure du bas b), complexation du cuivre dans une solution de cuivre par un film de P4VP,

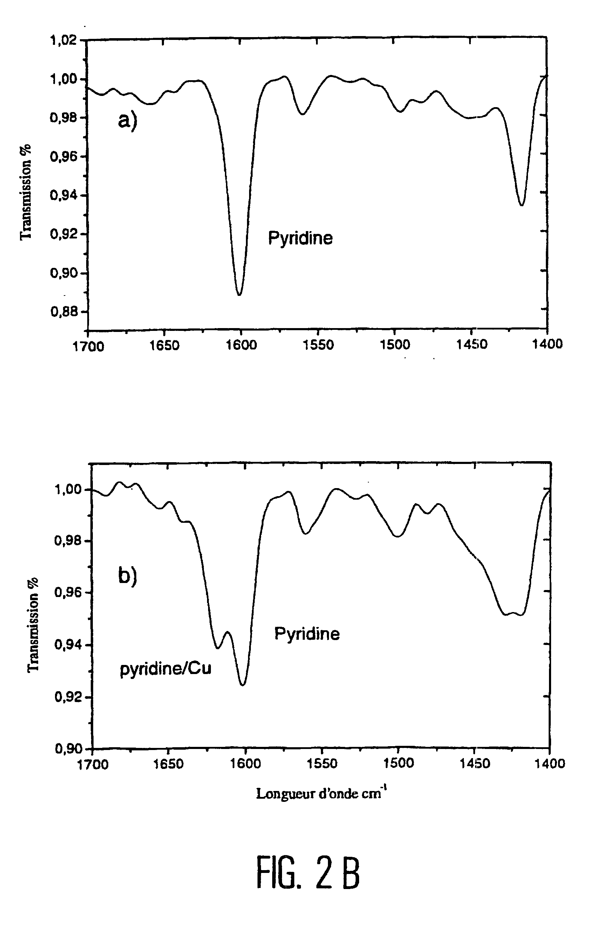

- La figure 2 B représente un agrandissement respectivement des deux spectres globaux de la figure 2 A sur la région vers 1600 cm$^{-1}$, avant, sur la figure du haut a), et après, sur la figure du bas b), complexation du cuivre dans une solution de cuivre par un film de P4VP,
- La figure 3 A représente un spectre IRRAS montrant les résultats enregistrés en fonction du temps au niveau des bandes infrarouges (IR) de la pyridine et de son complexe avec le cuivre pour un film de P4VP immergé dans une solution de cuivre de 15 mg/l,
- La figure 3 B représente la proportion de cuivre complexé estimée à partir des aires de bandes IRRAS en fonction du temps d'immersion du film de P4VP,
- La figure 4 représente trois spectres IRRAS illustrant un traitement du film de la présente invention à l'eau chaude, en haut à 25°C, au milieu à 70°C et en bas à 100°C,
- La figure 5 représente un spectre IRRAS de la forme pyridinium après lavage acide puis rinçage à l'eau dans un film de polymère organique selon l'invention,
- La figure 6 représente trois spectres IRRAS qui illustrent : (1) un film P4VP initial, non complexé, (2) un film P4VP complexé, et (3) un film décomplexé au moyen d'un traitement NH$_3$/eau chaude,
- La figure 7 représente trois spectres XPS qui illustrent : (1) un film P4VP initial, non complexé, (2) un film P4VP complexé, et (3) un film décomplexé au moyen d'un traitement NH$_3$/eau chaude,
- La figure 8 représente trois spectres IRRAS de film P4VP qui illustrent : (1) un film P4VP initial, non complexé, (2) un film après 5 cycles de complexation/expulsion, et (3) un film après 150 cycles de complexation/expulsion, le trait plein représentant le film "décomplexé", et le trait en pointillés le film "complexé",
- La figure 9 représente trois spectres IRRAS de film P4VP qui illustrent : (1) un film P4VP initial, non complexé, (2) un film après 1 cycle de complexation/expulsion, et (3) un film après 4 cycles de complexation/expulsion, le trait plein représentant le film "décomplexé", et le trait en pointillés le film "complexé",
- Les figures 10 représentent schématiquement une cellule conçue de deux blocs Téflon avec séparateur membranaire pour surfaces de moyennes dimension, la figure 10 A représentant une vue en perspective transparente de ladite cellule, la figure 10 B représentant une vue de côté d'un des deux blocs après séparation du second bloc, la figure 10 C représentant une vue en coupe par un plan perpendiculaire à celui de la figure 10 B,

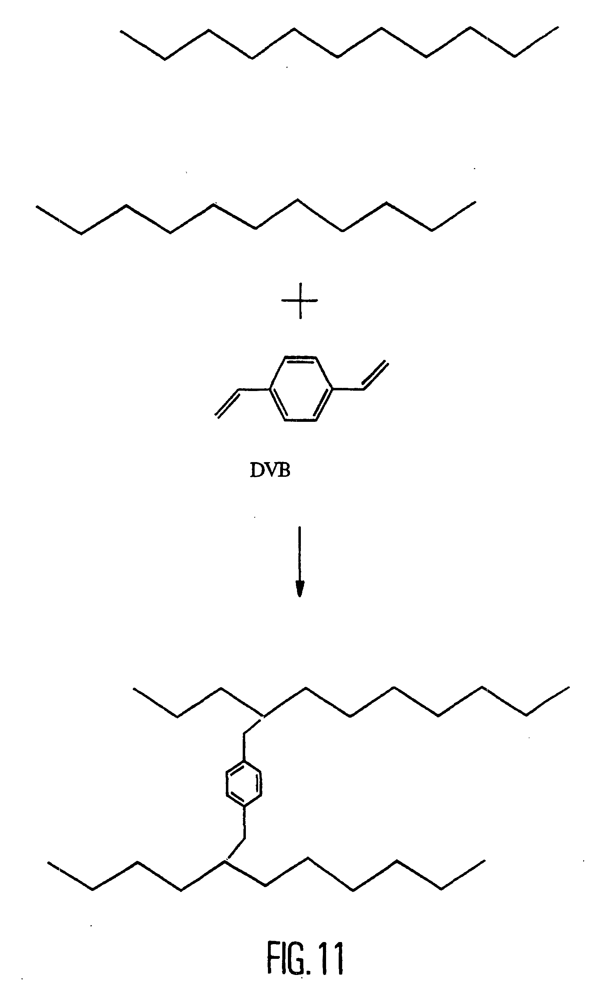

- La figure 11 représente la réticulation de chaînes de polymères isolées par une molécule de divinyl benzène,
- La figure 12 représente un profil d'épaisseur d'un film obtenu en présence de DVB à 5 %, mesuré perpendiculairement à une rayure faite dans le film au moyen d'un stylet en exerçant une pression du stylet de 5 mg,
- La figure 13 représente quatre spectres IRRAS montrant l'influence de la teneur en DVB sur l'épaisseur des films,
- La figure 14 représente un profil d'épaisseur d'un film obtenu en présence d'oligomères préformés, mesurés perpendiculairement à une rayure faite dans le film au moyen d'un stylet en exerçant une pression du stylet de 5 mg,
- La figure 15 représente trois spectres obtenus par microscopie IR sur une toile d'INOX,
- La figure 16 A est une image par microscopie électronique à balayage (MEB), en grossissement x 200, d'une toile INOX non revêtue,
- La figure 16 B est une image par microscopie électronique à balayage, en grossissement x 200, d'une toile INOX revêtue d'un film de polymère organique P4VP selon la présente invention,

- la figure 17 est un schéma d'un dispositif de traitement continu d'un effluent à traiter selon l'invention comprenant une noria,
- la figure 18 est un schéma d'une vue en perspective d'un godet de la noria représentée sur la figure 17 sur son rail d'entraînement,
- la figure 19 est un schéma d'une vue en coupe d'un des godets de la noria représentée sur la figure 17,
- la figure 20 est un graphique présentant l'évolution de la concentration en cuivre d'un effluent en fonction du nombre de passages de l'effluent dans un godet comprenant une structure complexante selon l'invention,
- la figure 21 représente la Structure moléculaire du vinyl ferrocène (gauche) et du 4-vinyl benzo 18-couronne-6 utilisés dans un des modes de réalisation de la présente invention,
- la figure 22 est une représentation graphique d'un spectre IRRAS d'un film de poly-(vinyl--ferrocène) obtenu par greffage par électropolymérisation sous polarisation cathodique selon la présente invention,
- la figure 23 est une représentation graphique de la réponse voltammétrique I (mA) en fonction de E (mV) d'un film de 20 nm de poly-(vinyl ferrocène) greffé sur platine par électropolymérisation sous polarisation cathodique selon la présente invention,
- la figure 24 est une représentation graphique d'un spectre IRRAS d'un film d'un copolymère de vinyl-ferrocène et de 4-vinyl benzo 18-couronne selon la présente invention, et

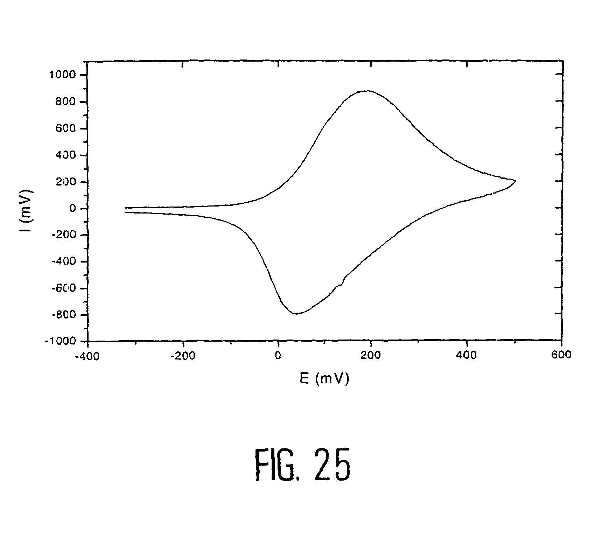

- la figure 25 est un représentation graphique de la réponse voltammétrique I (mA) en fonction de E (mV) d'un film de 40 nm de poly-co-(vinyl ferrocène-4-vinyl benzo 18-couronne-6) greffé sur platine par électropolymérisation sous polarisation cathodique selon la présente invention.

## Exemples d'application

### 1. Les substrats

Toiles métalliques : pour répondre aux exigences d'une démarche d'adsorption qui nécessitent une surface d'échange importante, les substrats sélectionnés sont ici des toiles métalliques tissées. Ces matériaux sont généralement utilisés dans le domaine de la filtration.

Le diamètre des fils et le type de maillage permettent d'obtenir des ouvertures nominales de quelques micromètres à quelques dizaines de micromètres. Ces conditions permettent de réaliser une division très fine du liquide qui s'écoule au travers dans le cas d'une filtration transverse. Dans une situation dans laquelle le polymère n'est pas électroactif, c'est-à-dire polymère conducteur, aucune force ne permet de diriger les ions cuivre vers la surface adsorbante, par conséquent, la division du liquide devient primordiale pour favoriser la formation du complexe cupro-pyridine. De plus, cherchant à capter des espèces de taille atomique tels que les sels de cuivre, au travers de mailles micrométriques, il paraît évident qu'un nombre important de passage du liquide au travers des toiles doit être réalisé pour augmenter la chance de rencontre entre les deux entités. Cet aspect sera exposé ci-après dans la présentation d'un dispositif de purification selon l'invention.

Ouverture nominale : afin d'obtenir la plus grande surface développée et la plus fine division du liquide, les inventeurs ont sélectionné parmi les différentes caractéristiques de toiles disponibles sur le marché celles qui étaient fabriquées avec les fils les plus fins et qui, avec le plus grand nombre de fils par centimètre de toile, présentaient la plus faible ouverture nominale. Cependant, il a fallu tenir compte des phénomènes de pertes de charges, au travers de la toile, liés aux forces de frottement et au colmatage des toiles par exemple par des particules de calcaire.

Les toiles sélectionnées présentent une ouverture nominale de 50 micromètres et une surface géométrique réelle de 8 $cm^2$ par $cm^2$ apparent de toile 220,5 fils/cm (560 fils/pouce) de diamètre 100 microns, trame : 15,7 fils/cm (40 fils/pouce) de diamètre 180 microns maille) (Voir tableau 1 ci-dessous).

Nature métallique des fils : afin de limiter les problèmes de corrosion liés, soit à la nature des milieux à purifier, soit aux méthodes d'expulsion des ions, les fils des toiles ont été sélectionnés en INOX 316L. En effet, des surfaces de nickel ont montré, au cours d'essais préliminaires, des phénomènes d'attaques corrosives dans des milieux chlorures tels que $CuCl_2$.

Tableau 1 :

| caractéristiques des toiles métalliques tissées (Société SPORL, Fenoyl Filtration) | | | | | |
|---|---|---|---|---|---|
| Dia. chaîne (mm) | Dia. trame (mm) | Nombre chaînes/cm (inch) | Nombre trames/ cm (inch) | Surface réelle ($cm^2/cm^2$) | Ouverture nominale (µm) |
| 0,007 | 0,004 | 65 (165) | 1400 | 551 (8,48) | 10 |
| 0,007 | 0,005 | 65 (165) | 800 | 315 (6,47) | 15 |

Tableau 1 :   (suite)

| caractéristiques des toiles métalliques tissées (Société SPORL, Fenoyl Filtration) | | | | | |
|---|---|---|---|---|---|
| Dia. chaîne (mm) | Dia. trame (mm) | Nombre chaînes/cm (inch) | Nombre trames/ cm (inch) | Surface réelle ($cm^2/cm^2$) | Ouverture nominale (µm) |
| 0,0125 | 0,0071 | 31,5 (80) | 400 | 157,5 (4,82) | 35 |
| 0,018 | 0,014 | 15,7 (40) | 200 | 78,7 (4,42) | 55 |
| 0,036 | 0,026 | 9,5 (24) | 110 | 43,3 (4,67) | 80 |
| 0,006 | 0,0045 | 78,7 (200) | 600 | 236 (4,89) | 20 |
| **0,018** | **0,01** | **15,7 (40)** | **560** | **220,5 (7,93)** | **50** |
| 0,025 | 0,02 | 7,9 (20) | 230 | 90,6 (6,90) | 100 |
| 0,01 | 0,0076 | 31,5 (80) | 700 | 275,6 (7,68) | 25 |
| 0,025 | 0,015 | 11,8 (30) | 360 | 141,7 (7,72) | 80 |
| 0,023 | 0,018 | 11,8 (30) | 150 | 59,1 (4,25) | 65 |

**2. Synthèse d'une structure complexante selon l'invention**

L'électropolymérisation : les étapes de greffage et de croissance des films de P4PV sont ici réalisées par électropolymérisation. Ce procédé permet de fabriquer des films stables chimiquement, homogènes et d'épaisseur contrôlée. Le milieu de synthèse est composé d'un solvant, l'acétonitrile, d'un monomère, comme co-solvant, puisque sa concentration est de 50%, et d'un sel support, le tétraéthylammonium perchlorate (TEAP). La forte proportion de monomère est justifiée par le souhait de favoriser une réaction secondaire d'électrode qui aboutit à la formation du film greffé. Le procédé d'électropolymérisation qui correspond à une réaction de polymérisation électro-amorcée est très peu consommateur d'électricité puisque la réduction d'une molécule de monomère suffit à initier une chaîne complète de polymère. Par conséquent, ce procédé est peu dépendant des lignes de champs présentes dans la cellule et il est parfaitement adapté au recouvrement de surfaces de formes complexes, comme les toiles dans le cas présent.

Les synthèses sont menées en mode potentiostatique pulsé. Cette démarche permet de mieux contrôler les conditions de croissance des chaînes en limitant les quantités de courant injectées, réaction d'amorçage, pour privilégier les réactions de croissance. D'autre part, les temps de repos permettent de réapprovisionner l'interface en monomère par diffusion.

Le mode opératoire des synthèses est décrit par exemple, par C. Lebrun, G. Deniau, P. Viel, G. Lécayon, Surface Coatings Technology, 100-101, 474 (1998)). Rappelons seulement que le potentiel de travail ($V_{on}$) est choisi dans la barrière d'électroactivité du monomère, qui débute vers -2,5 V/($Ag^+$/Ag). Le potentiel de relaxation ($V_{off}$) est choisi à une valeur inférieure, en valeur absolue, au potentiel d'équilibre initial (-0,6 V/($Ag^+$/Ag)) et permet au travers d'une réaction d'oxydation mettant en jeu le solvant de créer un défaut moléculaire, réticulation qui stabilise les chaînes formées sur la surface de l'électrode. Ces conditions sont celles de base qui servent à la synthèse des films de P4VP, nous verrons au cours de la présentation des résultats que des "additifs" sont incorporés dans les solutions pour optimiser les conditions de synthèse et les propriétés des films.

Les conditions de synthèse électrochimique sont les suivantes :

- Concentration en monomère : 50% dans l'acétonitrile
- Electrolyse pulsée :

  $V_{on}$ = -2,8 V/($Ag^+$/Ag)      $t_{on}$ = 200 ms
  $V_{off}$ = 0 V/ ($Ag^+$/Ag)      $t_{off}$ = 400 ms

- Nombre de pulses :

  1000 à 4000 (selon les épaisseurs souhaitées, 50 à 200 nm)

**3. Résultats :**

3.1. Phases échantillons de laboratoire, Surface = 2 cm$^2$

Cette première étape réalisée sur des surfaces de laboratoire, lames de verre métallisées sous vide, permet de rechercher et d'optimiser les conditions de synthèse des films ainsi que les conditions opératoires, cycles complexation/expulsion, qui simulent le fonctionnement d'un procédé industriel. Les inventeurs ont exploité leurs propres moyens spectroscopiques d'analyse des surfaces : IRRAS, XPS, Profilométrie.

3.1.1. Conditions expérimentales

Les premières études sur l'aptitude des films de P4VP électrogreffés à fixer et à relâcher les sels de cuivre ont été faites sur des surfaces de verre métallisées par du nickel, par un procédé radiofréquence.
La cellule de synthèse utilisée est une cellule en verre de petit volume dont les compartiments sont séparés par un verre fritté. La surface des lames de verre revêtue par les films est proche de 2 cm$^2$ et correspond au diamètre du verre fritté.

- Le compartiment de travail, électrode de nickel polarisée cathodiquement, est conditionné avec une solution comprenant 50% de monomère, la 4-vinyl pyridine et 50% d'acétonitrile. La concentration en TEAP est de 5x10$^{-2}$ mol. dm$^{-3}$.
- Le compartiment contre électrode, électrode de platine polarisée anodiquement, est conditionné avec une solution ne contenant pas de monomère.
- L'électrode de référence est basée sur le système Ag$^+$/Ag (10$^{-2}$ mol.dm$^{-3}$).

La séparation des compartiments est réalisée pour limiter la réaction d'oxydation du monomère qui conduit à la formation d'un film isolant sur la surface des contre-électrodes. Ces films sont formés principalement de composés insolubles et de chaînes de P4VP polymérisées radicalairement. L'absence de propriétés de gonflement de ces films se traduit par un blocage progressif du fonctionnement de la cellule. Cependant, la séparation des compartiments par le verre fritté n'est pas assez efficace dans le cas de cette cellule et la diffusion lente du monomère dans le compartiment finit par bloquer la contre-électrode. Les inventeurs ont eu recours alors à un changement régulier des contre-électrodes. Ce problème a été minimisé au cours des étapes suivantes par l'utilisation de séparateurs plus performants.
Pour répondre au choix d'une méthode privilégiant l'aspect surface du procédé les films de P4VP doivent rester minces. Cependant, il faut concevoir qu'un film idéalement surfacique dont l'épaisseur ne serait que d'une monocouche, inférieure à 1 nm, présenterait une trop faible capacité et nécessiterait alors une vitesse de cycle capture/ expulsion infiniment rapide afin d'avoir un minimum d'efficacité. Les films déposés sur les électrodes de travail ont des épaisseurs comprises entre 50 et 200 nm. Les mesures d'épaisseurs sont réalisées par profilométrie en pratiquant une rayure dans le film. Le caractère homogène des films permet également et plus rapidement d'estimer leurs épaisseurs à l'aide des couleurs interférométriques.

3.1.2. Etude de l'étape de complexation

a. Détection du complexe et stoechiométrie cuivre/pyridine

Cette étape a tout d'abord permis de vérifier l'aptitude des films au gonflement vis-à-vis de solutions aqueuses. Il est en effet nécessaire que la solution à dépolluer puisse pénétrer et diffuser dans les films avec un coefficient de partage favorable au niveau du cuivre.
Les analyses IRRAS et XPS ont permis de montrer que des films de P4VP plongés dans des solutions concentrées de cuivre (20 g/l) retenaient le cuivre même après des rinçages abondants. La formation de complexes cupro-pyridines est identifiée par l'existence d'une bande à 1617 cm$^{-1}$ dans les spectres IR.
La structure électronique du cuivre permet de le décrire comme un métal complexé dans une structure octaédrique, c'est-à-dire de un cuivre pour huit ligands. Cependant, les conditions particulières de faible mobilité des ligands pyridines liées au caractère solide du polymère modifient largement et favorablement cette stoechiométrie. Avec les incertitudes liées à l'analyse des intensités des pics IRRAS et XPS, il est cependant possible d'estimer que la proportion de cuivre par rapport aux groupements pyridines est en moyenne de 50%, stoechiométrie moyenne de complexation de l'atome de cuivre pour deux groupements pyridines. Certaines expériences ont cependant donné des taux de complexation proche de 100%. En résumé, le taux de complexation du cuivre c'est-à-dire le nombre de groupements pyridine liés à un cuivre varie avec la teneur en cuivre au sein du film, et tend vers la stoechiométrie 1 pour 1 aux teneurs élevées.

Ces résultats sont confirmés par la spectroscopie IRRAS : la proportion cuivre/pyridine est estimée par le rapport des aires entre les pics à 1600 et 1617 cm$^{-1}$ qui correspondent respectivement à la forme libre et complexée de la pyridine. Une décomposition numérique en utilisant l'ajustement du spectre expérimental avec un spectre recomposé à partir de gaussiennes centrées sur les pics à 1600 et 1617 cm$^{-1}$ permet de déterminer la proportion de groupes pyridines engagés dans les complexes. Cependant, ne connaissant pas le nombre de ligands pyridines par atome de cuivre elle ne permet pas d'avoir la quantité réelle de cuivre présente dans les films.

Cette information peut être apportée par l'utilisation de la spectroscopie XPS qui détermine directement la proportion réelle des différents atomes présents sur la surface. Les intensités des bandes de photoémissions $Cu_{2p}$ pour le cuivre et $N_{1s}$ pour l'azote permettent de déterminer la proportion réelle entre ces deux éléments. Il faut cependant normaliser ces intensités par les termes de section efficace qui prennent en compte le rendement de photoémission propre à chaque niveau électronique de chaque élément. D'autre part, la section efficace est dépendante de la forme chimique de l'élément. Les inventeurs utilisent la section efficace de l'oxyde de cuivre CuO comme forme approchée du sulfate de cuivre, pour laquelle le degré d'oxydation du cuivre est identique. Cette approximation conduit à l'introduction d'une légère incertitude. Le rapport de concentration cuivre/azote déterminé de cette façon sur un échantillon mince et fortement complexé, IRRAS proche de 100%, est proche de l'unité. On retrouve ainsi le résultat déjà mis en évidence par XPS.

Il est donc possible d'utiliser les rapports obtenus par IRRAS pour quantifier les teneurs en cuivre.

L'accord observé entre les deux méthodes, IRRAS et XPS, pour lesquelles les spectres ont été enregistrés sur des films minces, c'est-à-dire avec une bonne correspondance surface/volume, permet de valider les spectres IRRAS et de les exploiter quantitativement.

A partir de cette valeur mesurée, il est possible d'estimer la quantité de cuivre fixé pour une surface donnée de film. Si la densité du film est proche de 1, faible teneur, une surface de film 10 cm$^2$ et d'épaisseur de 200 nm est nécessaire pour fixer 0,1 mg de cuivre. Il faut remarquer que ces valeurs très faibles doivent être multipliés par la surface réelle de contact et l'épaisseur des films pour donner une indication de la quantité d'ions cuivre complexés par cm$^2$ de surface apparente. Ce point est considéré dans la suite.

b. Aspects cinétiques de la réaction de complexation

Si pour des concentrations importantes de cuivre de 20 g/l, les durées de complexation sont faibles, quelques secondes suffisent pour complexer significativement un film, il en est autrement pour les solutions 1 000 fois (20 mg/l) ou 10 000 fois (2 mg/l) plus diluées, qui peuvent correspondre à une partie au moins des solutions industrielles à traiter.

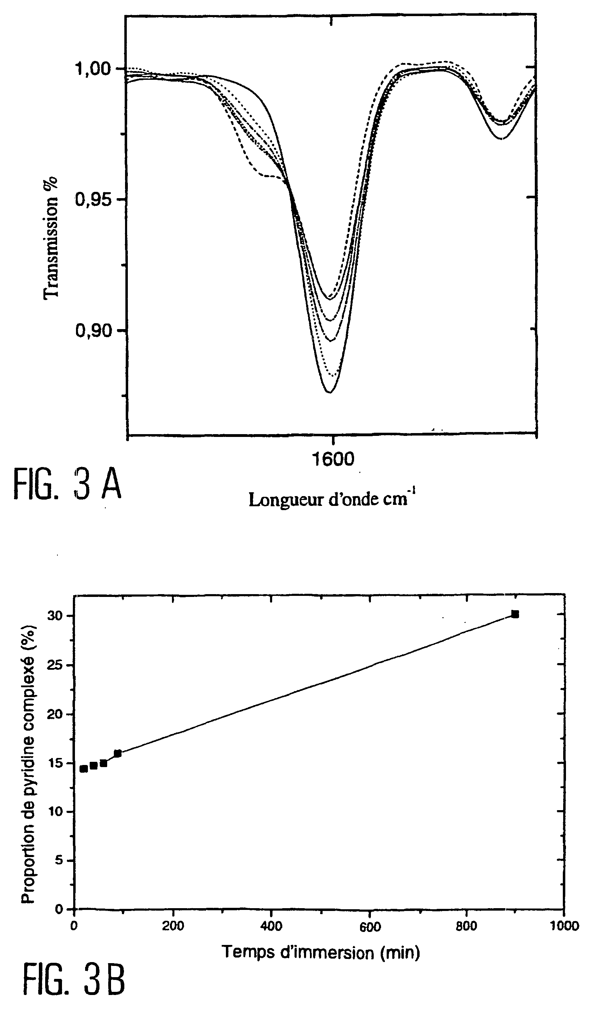

La figure 3a présente les résultats enregistrés au niveau des bandes IR de la pyridine et de son complexe avec le cuivre pour un film de P4VP immergé dans une solution de 15 mg/l. Cette valeur est représentative d'une teneur moyenne d'effluent purifié classiquement. Les calculs des proportions de formes complexées estimés à partir des aires des bandes IRRAS sont présents sur la figure 3b.

Le film de P4VP de 100 nm est électropolymérisé sur une lame de verre nickelée. Sa surface est de 3 cm$^2$. La solution n'étant pas agitée l'échantillon est plongé dans un volume de solution réduit au minimum, c'est-à-dire de 10 cm$^3$. Un enregistrement IRRAS est réalisé à intervalles de temps régulier. L'apparition de la bande du complexe à 1617 cm$^{-1}$ atteint relativement rapidement 5 à 10% de taux de complexation, mais il faut attendre 15 heures pour avoir 20% de taux de complexation.

Ce résultat peut être analysé de plusieurs façons exposées ci-dessous.

Un premier point positif est lié au fait que malgré une teneur très faible en solution, la complexation se produit. Il n'y a pas de limite inférieure en concentration sous laquelle le complexe ne se forme plus. Ce point de vue sera renforcé ci-dessous. La constante de complexation est telle qu'il y a un déplacement continu du cuivre vers le film quelle que soit la concentration en solution. En terme de coefficient de partage du cuivre entre la solution et le film, la formation du complexe est favorable.

Un second point positif est lié au fait que même si la progression de la fixation du cuivre est lente, il faut attendre 14 heures pour doubler la quantité de cuivre, la teneur s'établit rapidement à des valeurs significatives. Les conditions de mesure n'ont pas permis d'obtenir les proportions de cuivre dès les premiers instants. Cette possibilité sera offerte dans la suite de cette étude par l'introduction de méthodes "in situ" d'impédance électrochimique. A ce stade des résultats, il est important de commenter les valeurs de "proportion de pyridine complexée". En effet, il semble intuitif que la complexation du cuivre commence par la surface du film, cela signifie que cette valeur est dépendante de l'épaisseur du film. Pour une même quantité de cuivre complexé, cette proportion sera supérieure pour un film plus mince. Il ne faut donc pas interpréter strictement cette valeur comme une estimation de la performance du dépôt. Des films minces peuvent être suffisants pour complexer des solutions très diluées, alors que des films plus épais seront utiles en cas d'augmentation ponctuelle des teneurs en cuivre.

Dans cet exemple, beaucoup de paramètres sont cependant défavorables à la rencontre à l'échelle moléculaire entre les ions et le film. En effet, le rapport surface (film) /volume (solution) est très faible avec une lame plane, et l'absence d'agitation est également défavorable. En effet, les toiles divisent le liquide en de très fins volumes, ainsi l'écoulement, nécessairement non laminaire, permet de créer une "agitation". Ces résultats font clairement apparaître que dans l'alternative, liée à ce genre de procédé, entre atteindre des taux de complexation élevés puis expulser ou accepter un taux beaucoup plus faible mais obtenu très rapidement et réaliser l'expulsion beaucoup plus souvent, cette dernière solution est la plus performante.

Les films de P4VP greffés par électropolymérisation complexent donc les ions $Cu^{2+}$, même en couche minces.

Cette complexation est aisément détectable en IRRAS, avec l'apparition d'une bande à 1617 $cm^{-1}$, caractéristique du groupement pyridinium.

La complexation est quantitative, mais lente sur des films greffés sur lames et sans agitation.

3.1.3. Etude de l'étape d'expulsion : sélection de la méthode

Une fois l'étape de complexation réalisée, il est nécessaire d'expulser avec efficacité les ions cuivre. A ce niveau du procédé, il est important que cette étape soit rapide et ne génère que peu de déchets secondaires. L'expulsion doit donc se faire avec des agents faiblement nocifs et/ou dans des volumes les plus réduits possibles.

Pour cela, plusieurs méthodes ont été testées avec pour objectif de décomplexer le cuivre de la pyridine et de l'extraire du film. Il est à remarquer que les divers types de traitements qui ont été testés ont permis de vérifier l'excellente stabilité chimique des films électrogreffés vis-à-vis de traitements chimiques agressifs à la différence, de films témoins réalisés "au trempé" à partir de solutions de polymère, qui eux ont été rapidement éliminés des surfaces.

a. Traitement des films à l'eau bouillante :

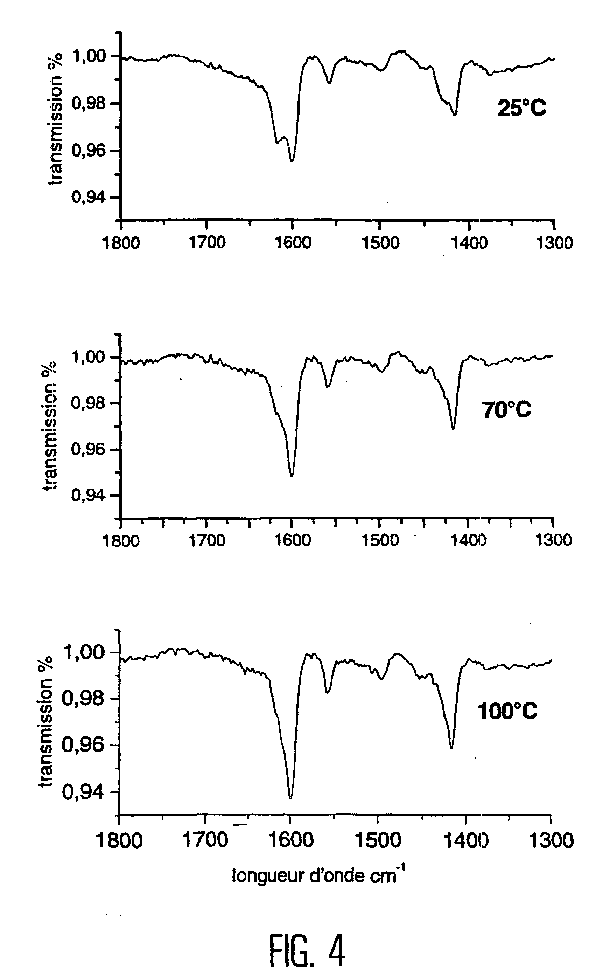

Cette première démarche a été testée du fait de sa faible nocivité. Elle s'appuyait sur l'idée qu'un apport d'énergie thermique pouvait stabiliser le complexe cupro-pyridine. Les premiers essais de rinçage sous eau chaude ont montré par IRRAS une diminution de l'intensité de la bande du complexe et corrélativement une régénération de la pyridine libre. Ces essais ont été poursuivis dans de l'eau à 70°C puis frémissante. Quelques minutes de traitement font disparaître totalement la bande IRRAS du complexe d'un film de 100 nm complexé au 2/3 (figure 4).

Une analyse XPS a montré que des traces de cuivre persistent en surface du film alors que la teneur en cuivre demeure identique en profondeur après abrasion ionique. Il est donc évident que même si le complexe est détruit le cuivre n'était pas réellement éliminé des films. Vraisemblablement, des formes hydroxydes doivent se former dans le film. Néanmoins, ce résultat est intéressant car il permet au moins de restituer la réactivité des groupements pyridines. Ce traitement à l'eau bouillante pourrait à terme être associé au traitement retenu pour limiter l'utilisation de produits plus polluants.

Le traitement des films complexés à l'eau bouillante permet donc une décomplexation efficace du film, mais pas l'expulsion des ions hors du film.

b. Traitement par cycle acide/base :

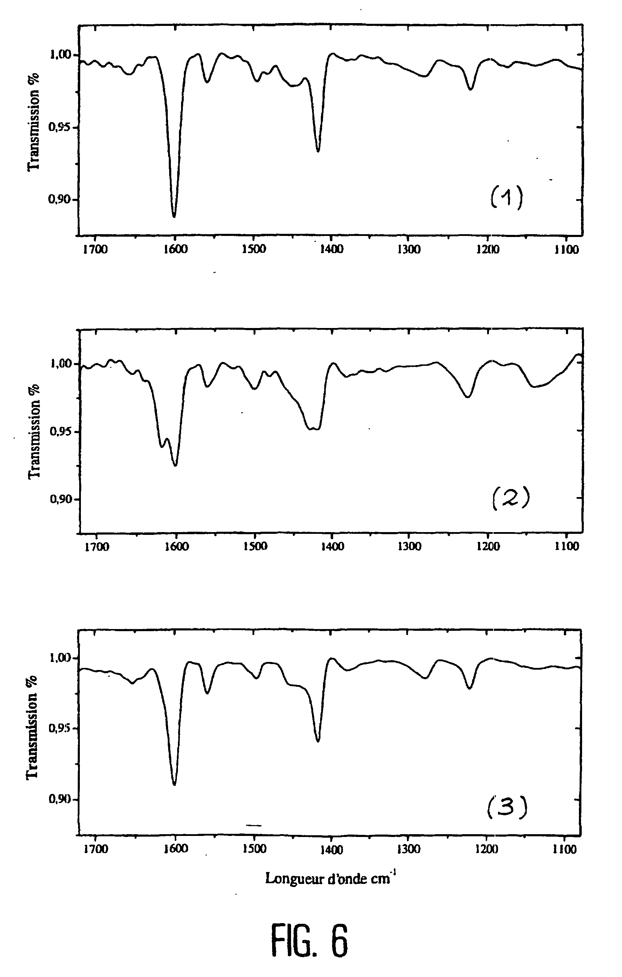

Le $pK_a$ de la pyridine est proche de 4,5 et des traitements à l'acide acétique ou à l'acide chlorhydrique dilué ont permis d'observer la forme pyridinium représentée par la bande IRRAS à 1640 $cm^{-1}$ sur la figure 5. La protonation de l'azote fait perdre au groupement pyridine ses propriétés faiblement basique liées à son doublet électronique. Le cuivre est alors expulsé et libéré dans le film puis en solution. On parle alors de lavage acide.

A ce stade, le film de P4VP ayant perdu ses propriétés complexantes, il faut régénérer la forme pyridine. Un traitement basique doit être utilisé car le simple passage à un milieu de pH supérieur au $pK_a$ ne permet pas d'éliminer la forme pyridinium. Ceci conduit donc dans cette démarche à deux étapes de traitement : le lavage acide puis la neutralisation. Cette situation n'est pas souhaitable dans le cadre d'un procédé qui souhaite être générateur du moins de déchets secondaires possibles.

Le traitement acide des films complexés permet donc une décomplexation efficace, mais nécessite une re-neutralisation ultérieure pour que le film soit à nouveau disponible pour la complexation.

c. Traitement basique direct, méthode à l'ammoniaque

Cette démarche utilise directement le passage en solution basique. Le choix de la base s'est porté sur l'ammoniaque ($NH_3$) afin de créer un complexe de cuivre plus stable que celui formé avec la pyridine et par conséquent capable de déplacer le cuivre. L'ammoniaque présente également l'intérêt d'être un produit peu cher.

Les résultats présentés dans les paragraphes suivant montrent l'efficacité du traitement et son innocuité vis-à-vis des films.

Etude de l'étape de décomplexation par une solution d'ammoniaque

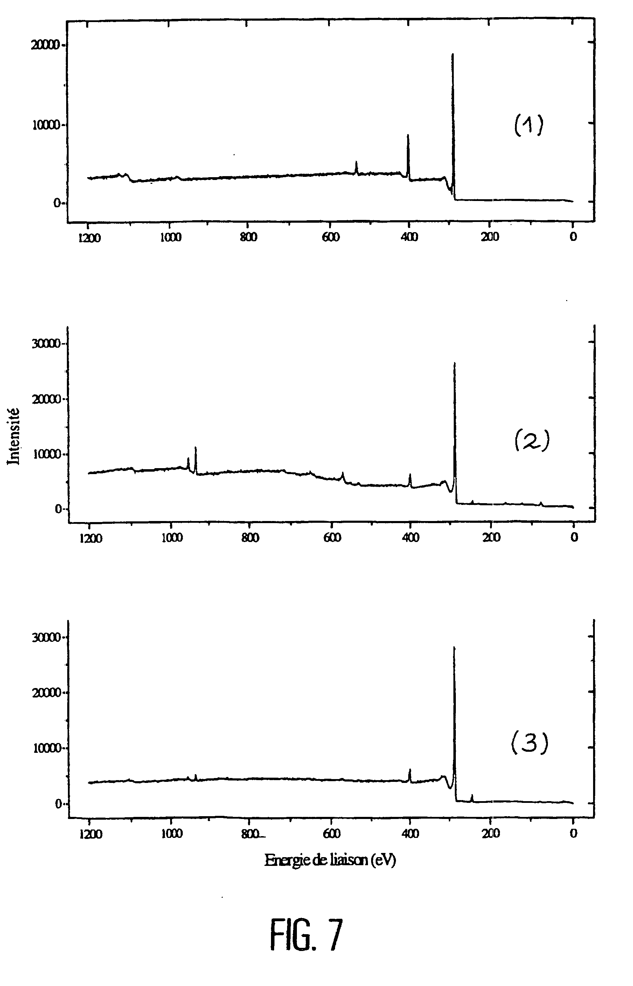

Les films de P4VP utilisés pour cette étude ont été synthétisés dans les conditions classiques (monomère : 50%, $V_{on}$ = -2,8 V/ (Ag$^+$/Ag) , t$^{on}$ = 200 ms, $V_{off}$ = 0 V/ (Ag$^+$/Ag) , $t_{off}$ = 400 ms, n = 2000, Ep. = 100 nm). Les spectres IRRAS et XPS des films dans leur état initial sont enregistrés et présentés respectivement figure 6(1) et figure 7(1).

Pour réaliser l'étape de complexation, ces films ont été immergés 5 minutes dans une solution de cuivre à 10 g/l.

Après rinçage abondant à l'eau désionisée, les spectres IRRAS et XPS sont enregistrés et présentés respectivement figure 6(2) et figure 7(2). Dans ces conditions près de 50% des groupements pyridines sont complexés. La plus faible intensité apparente des bandes du cuivre dans le spectre XPS provient du rinçage abondant qui lave très superficiellement le film. Cependant, les spectres IRRAS peuvent être exploités quantitativement.

La solution d'ammoniaque est préparée à 1,1 mol.dm$^{-3}$, dilution de l'ordre de 10% de l'ammoniaque pur.

L'étape de décomplexation est très rapide, une immersion de 1 minute suffit à éliminer le cuivre du film. Les films sont également rincés sous l'eau chaude avant l'analyse. Les spectres IRRAS et XPS présentés respectivement figure 6(3) et figure 7(3)témoignent de l'élimination du cuivre.

Comme on peut le voir sur le spectre IRRAS de la figure 6(3), la bande à 1620 cm$^{-1}$ correspondant au complexe pyridine-Cu$^{2+}$ à pratiquement disparu après le cycle de décomplexation, solution d'ammoniaque et d'eau chaude, on observe corrélativement une réapparition de la bande de la pyridine à 1600 cm$^{-1}$. La faible proportion de cuivre restant après ce traitement n'est que de quelques pourcents. L'efficacité de cette opération est supérieure à 90%. La trace de cuivre restant peut cependant être totalement éliminée pour produire une régénération totale du film lorsque l'on traite le film dans de l'eau bouillante pendant 1 heure. Cette opération supplémentaire peut être réalisée occasionnellement et ne génère aucune altération des performances du film.

Il faut cependant remarquer une légère diminution de l'intensité IR du groupement pyridine après le traitement à l'ammoniaque sans diminution apparente de l'épaisseur du film. Ce phénomène est interprété en terme d'extraction de chaînes polymères simplement insérées dans le film. Comme montré dans le paragraphe suivant ce phénomène tend très rapidement à disparaître au cours des cyclages.

Le traitement basique (NH$_3$) des films complexés permet donc à la fois une bonne décomplexation et une bonne expulsion hors du film, et ce de façon très rapide. Un traitement périodique à l'eau chaude permet de régénérer quasi-totalement les capacités initiales du film à complexer les ions cuivre.

Tenue des films au cyclage

Cet exemple permet de vérifier que les cycles de complexation/expulsion des ions cuivre n'altèrent pas les propriétés des films. Un test de stabilité a été effectué en soumettant un film à un grand nombre de cycles.

Pour réaliser ce test, une solution très concentrée en ammoniaque, dilution à 50% en volume de la solution commerciale soit ≈ 8 mol.dm$^{-3}$, a été retenue. Ces conditions plus sévères en terme de pH permettent de tester le film en situation limite.

Les étapes de complexation correspondent à l'immersion du film une minute dans une solution concentrée de CuSO$_4$. Les étapes de décomplexation sont effectuées dans l'ammoniaque concentré suivi d'un rapide rinçage à l'eau bouillante.

Les analyses IRRAS ont été réalisées pour chaque étape lors des dix premiers cycles, puis une fois par dizaine jusqu'à 150 cycles.

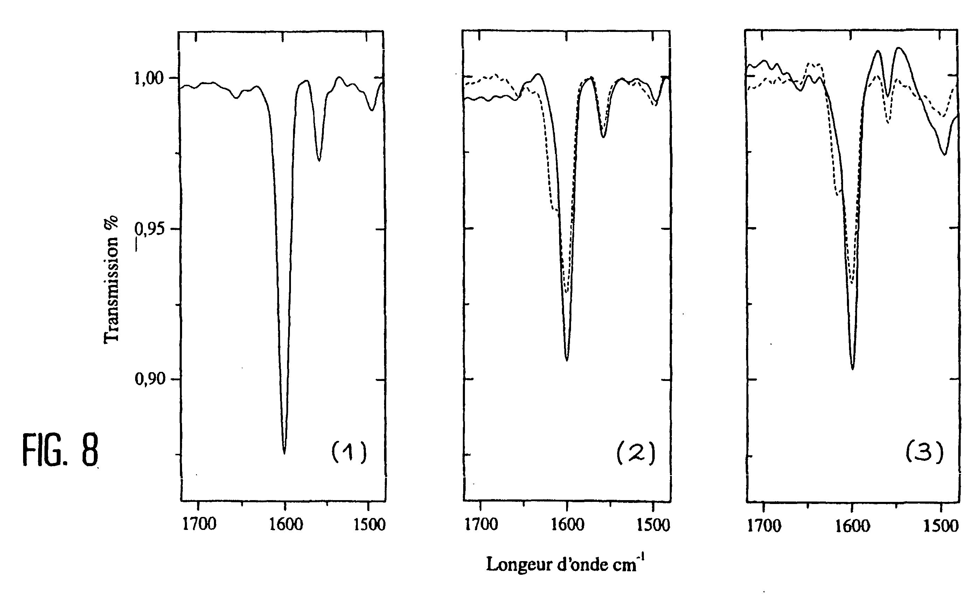

Après 150 cycles de complexation/expulsion la tenue du film est excellente et les performances inaltérées comme le montre la figure 8.

Comme souligné dans le paragraphe précédent, l'intensité de la bande pyridine à 1600 cm$^{-1}$ diminue sensiblement entre le premier et le second cycles. On n'observe par contre plus cette diminution d'intensité au cours des cycles suivants : le film atteint une épaisseur stable.

Les propriétés du film greffé restent donc inaltérées après 150 cycles de complexation/décomplexation. Elles sont pleinement exploitables par exemple par la combinaison de traitements à l'ammoniaque combinés à une régénération périodique à l'eau chaude.

Etude des teneurs résiduelles en cuivre dans l'effluent dilué (recyclable)

Cet exemple permet de confirmer que le cuivre est bien complexé par le film puis expulsé dans la solution ammoniaquée et qu'une répétition de cette opération permet effectivement de purifier la solution de cuivre.

Pour cette expérience, les inventeurs ont utilisé 10 ml de solution de CuSO$_4$, concentration en Cu$^{2+}$ 15 mg. L$^{-1}$, et deux lames recouvertes de film d'une épaisseur de l'ordre de 100 nm.

Les conditions dans lesquelles a été effectuée cette expérience sont très limitantes pour la vitesse de la réaction, puisque la teneur en cuivre dans la solution est faible, que la surface d'échange reste réduite et qu'aucune agitation n'est utilisée pour favoriser la statistique de contact entre les ions cuivre et le film.

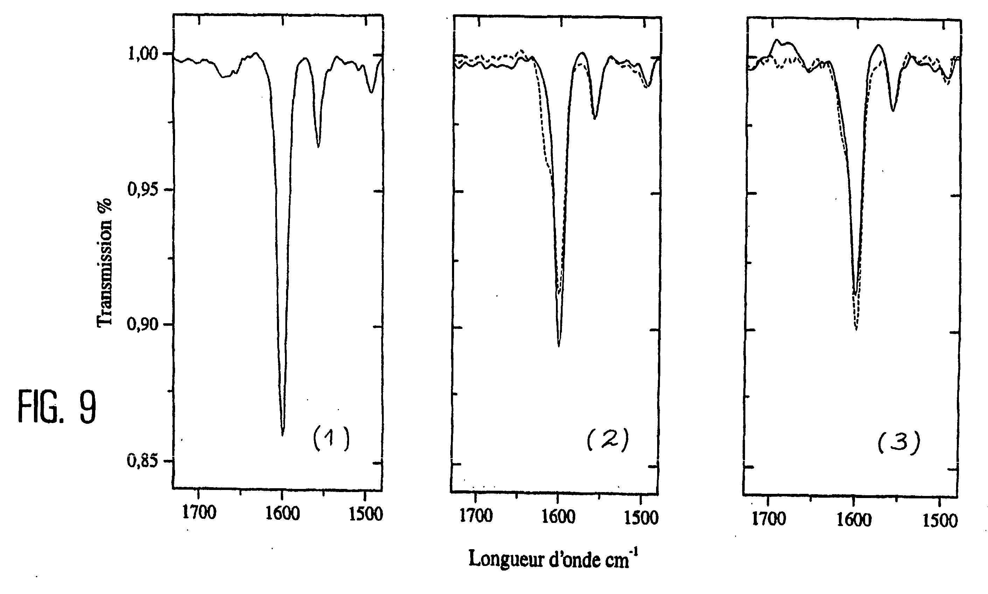

La phase de complexation est particulièrement lente dans ces conditions puisque 12 heures d'immersion sont nécessaires pour complexer environ 15% des groupements pyridines au cours du premier cycle, figure 9. La lame est alors décomplexée par une solution d'ammoniaque puis ré-introduite dans la solution à purifier. Après le quatrième cycle, la composante IRRAS du complexe devient difficilement observable. Dans cette situation, la teneur en cuivre est mesurée par un test colorimétrique (visiocolor) avec une bonne précision à : $C_{cu2+} = 0,25$ mg.L$^{-1}$ (norme européenne 2 mg.L$^{-1}$).

La concentration initiale étant de 15 mg.L$^{-1}$, la teneur en cuivre a diminué d'un facteur 60.

Même si ce type d'expérience reste très éloignée d'une séquence de purification à l'échelle industrielle elle montre qu'il n'y a pas de limitation de nature chimique à la démarche entreprise. La quantité de cuivre fixé par unité de surface est en accord avec la valeur donnée précédemment : 0,1 mg de cuivre pour 10 cm$^2$ de film de 200 nm. Les mesures par le test colorimétrique sont simples à mettre en oeuvre et peu coûteuses (test visiocolor). La précision et la fiabilité du test ont été testée à partir de solutions de concentrations étalonnées et choisies dans la gamme de mesure de la méthode. Ces solutions de sulfate de cuivre dissout dans de l'eau désionisée ont été réalisées par des pesées précises. La gamme de mesure de visocolor est échelonnée entre 0,04 et 0,5 mg/l. Des dilutions des solutions à mesurer ont dû être faites lorsque cela est nécessaire pour s'ajuster aux teneurs accessibles par la méthode.

La complexation par un film de P4VP greffé sur plaque permet donc de descendre, en 4 cycles de passage, de 1,5 mg/l à 0,25 mg/l, soit environ 10 fois au-dessous des concentrations seuils fixées au niveau préfectoral. Le gain de concentration est d'un facteur 60. Seule la cinétique de passage reste lente dans cette configuration plaques.

Etudes des teneurs en cuivre dans l'effluent concentré Détermination du facteur de concentration du déchet

Pour atteindre une efficacité importante du procédé développé, il est important d'une part d'abaisser au plus bas la teneur dans l'effluent recyclable mais surtout de concentrer l'ion lourd dans le plus faible volume au niveau du bain de purification. Le rapport entre le volume initial à traiter et le volume final de solution concentré traduit les performances du procédé.

Ainsi, une expérience de décomplexation a été effectuée avec différentes solutions en ammoniaque, $C \approx 1,6$ mol.l$^{-1}$ contenant le complexe formel $Cu(NH_3)_n{}^{2+}SO_4{}^{2-}$ avec n = 1, 2, 4, 6, 8, 10, 20, 40, 60, 80, 120, 160.

Cette expérience a permis de déterminer la quantité de cuivre maximale que peut contenir la solution d'ammoniaque à saturation de la solution, tout en restant efficace à la décomplexation.

Les constantes de dissociation du complexe peuvent nous donner une idée :

$$Cu[NH_3]_6{}^{2+} \Leftrightarrow Cu[NH_3]_5{}^{2+} + NH_3$$

avec

$$K_{D6} = [Cu(NH_3)_5{}^{2+}] \cdot [NH_3]/[Cu(NH_3)_6{}^{2+}]$$

$$Cu[NH_3]_5{}^{2+} \Leftrightarrow Cu[NH_3]_4{}^{2+} + NH_3$$

avec

$$K_{D5} = [Cu(NH_3)_4{}^{2+}] \cdot [NH_3]/[Cu(NH_3)_5{}^{2+}]$$

$$Cu[NH_3]^{2+} \Leftrightarrow Cu^{2+} + NH_3$$

avec

$$K_{D1} = [Cu^{2+}] \cdot [NH_3]/[Cu(NH_3)^{2+}]$$

avec $pK_{D1} = 4$ ; $pK_{D2} = 3,3$; $pK_{D3} = 2,7$ ; $pK_{D4} = 2$; $pK_{D5} = -0,5$ ; $pK_{D6} = -2,5$.

D'autre part, la force d'un complexe est définie par la constante K d'équilibre. Par exemple, pour le complexe $Cu[NH_3]_6^{2+}$ d'équation :

$$Cu[NH_3]_6^{2+} \Leftrightarrow Cu^{2+} + 6\ NH_3$$

La constante d'équilibre globale $K_6$ s'écrit :

$$K_6 = [Cu^{2+}].\ [NH_3]^6/[Cu\ (NH_3)_6^{2+}]$$

donc $pK_6 = pK_{D1} + pK_{D2} + pK_{D3} + pK_{D4} + pK_{D5} + pK_{D6}$
       soit $pK_6 = 9$.

Ainsi, pour chaque complexe $Cu\ (NH_3)_n^{2+}$, il y a accès à la constante d'équilibre global $K_n$ :
$pK_1 = 4$ ; $pK_2 = 7,3$; $pK_3 = 10$ ; $pK_4 = 12$ ; $pK_5 = 11,5$; $pK_6\ 9$.

En conséquence, plus pK est grand plus le complexe est stable. A partir des valeurs des constantes, on peut déjà en déduire que la limite maximale, correspondant à la fin de complexation du cuivre par l'ammoniaque avec une grande efficacité, sera atteinte au complexe n = 4.

A partir des valeurs des constantes, on peut déjà déduire que la limite maximale, fin de complexation du cuivre par l'ammoniaque avec une grande efficacité, sera atteinte au complexe n = 6.

L'expérience effectuée sur film P4VP complexé puis décomplexé dans une solution d'ammoniaque, de n = 160 à n = 1, montre clairement une saturation et une perte totale d'efficacité lorsque la teneur en cuivre a atteint le seuil n = 10, soit : $Cu[NH_3]_{10}^{2+}$. A ce stade, il se produit un équilibre entre les forces qui tendent à complexer le cuivre dans l'effluent concentré et celles qui tendent à reformer le complexe dans le film sous l'action des fortes concentrations de l'effluent concentré.

Le calcul de la quantité de cuivre incorporable dans l'effluent concentré est simple. A partir d'un litre de solution d'ammoniaque de concentration 1,6 $mol.L^{-1}$ il sera possible au maximum de "récupérer" 0,16 mole par litre de $Cu^{2+}$, soit 10,1 g de cuivre par litre.

Si au départ, la solution à dépolluer contient 15 $mg.L^{-1}$), il sera possible de décomplexer 14,7 mg de $Cu^{2+}$ par litre.

Il faudra alors 10,1 1/14,7 x $10^{-3} \approx 700$ litres de solution à dépolluer pour saturer 1 litre d'ammoniaque à 1,6 $mol.L^{-1}$, soit un facteur 700 en diminution du volume.

Ainsi, en augmentant la concentration en ammoniaque, le facteur de diminution de volume est augmenté. Ces résultats sont exposés dans le tableau B ci-dessous. Les essais de tenue en cyclage ont été fait dans une solution de 1,6 $mol.l^{-1}$, cependant les essais dans les solutions plus concentrées n'ont pas montré de difficultés particulières. S'il est possible de concentrer 10 g de cuivre par litre ou plus, il est alors possible de traiter au final ce litre d'effluent concentré par des procédés classiques de précipitation par les hydroxydes utilisant par exemple de la laitance de ciment, ou de la chaux vive, et de former un résidu sec.

Tableau B :

| Taux de concentration du procédé en fonction de la concentration de la solution d' expulsion ($NH_3$) | | | | |
|---|---|---|---|---|
| Concentration en $NH_3$ ($mol.l^{-1}$) | 1,1 | 1,6 | 3 | 16 |
| Taux de concentration ou quantité de solution de cuivre (15 $mg.l^{-1}$) en L | 500 | 700 | 1300 | 7000 |

Le gain de volume entre la solution d'entrée et la solution de rejet dépend donc de la concentration de la solution d'ammoniaque et donc du prix de la solution d'extraction. Selon cette concentration, le facteur de gain peut atteindre 7000, c'est-à-dire 1 litre de solution de rejet pour 7 $m^3$ de solution traitée.

3.2. Phase sur lames planes et sur toiles métalliques de moyenne dimension (10 $cm^2$)

Cette partie concerne la prise en compte des conditions de préparation des filtres et de leurs utilisations en environnement industriel.

3.2.1. Conception d'une cellule Téflon avec séparateur membranaire

Le mode de synthèse des films de P4VP par élect:ropolymérisation, est repris ci-dessous de façon à l'adapter à la réalisation des toiles utilisée pour former la structure complexante de la présente invention.

La formation d'une couche isolante de P4VP sur les contre-électrodes a été décrite ci-dessous. Les difficultés ont été minimisées, d'une part en changeant chaque fois que cela était nécessaire les contre-électrodes et d'autre part, en ayant conçu une cellule de verre avec une séparation en verre fritté entre les deux compartiments pour limiter la diffusion du monomère. Au début de l'expérience, il y a 50% de monomère dans le compartiment cathodique et 0% dans le compartiment anodique.

Concernant les contre-électrodes des lames de verre métallisées sont conservées par procédé diode radiofréquence ("sputtering"). Cette démarche permet d'avoir de nombreuses contre-électrodes qui peuvent être rangées régulièrement. Des électrodes massives de platines représenteraient un coût élevé.

L'utilisation de verre fritté, qui est envisageable dans une conception de cellule en verre, l'est moins dans des cellules de plus grande dimension et utilisable en milieu industriel. C'est pourquoi les inventeurs ont sélectionné un nouveau type de séparateur, car il est indispensable de minimiser les réactions du monomère sur la contre-électrode. Ces séparateurs doivent ralentir la diffusion des espèces d'un compartiment vers l'autre sans bloquer le passage du courant.

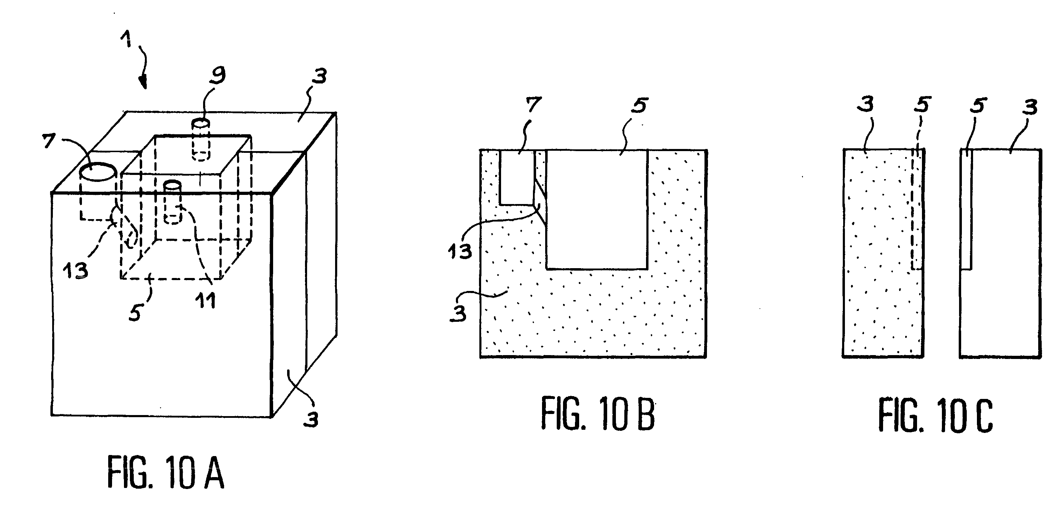

Le choix du séparateur étant lié à la nature du matériau de la cellule, le Téflon a été choisi pour réaliser cette nouvelle cellule. La cellule conçue en deux blocs de Téflon est représentée sur les figures 10A, 10B et 10C.

Sur ces figures, la référence 1 représente la cellule, la référence 3 représente un bloc séparément, la référence 5 représente la zone de remplissage du mélange de synthèse, la référence 7 représente le logement de l'électrode de référence, les références 9 et Il représentent les points d'ancrage permettant, via un pont (non représenté) le serrage de l'ensemble, et la référence 13 représente le conduit de communication entre le logement de l'électrode de référence et la zone de synthèse.

Elle permet un démontage simple et l'utilisation de séparateur membranaire. La souplesse du Téflon permet de serrer correctement la membrane et de créer une bonne étanchéité de la cellule.

Les premières membranes sélectionnées ont été de type métallo céramique TRMC avec un diamètre de pore de 0,07 micromètres. La composition de la membrane est la suivante : INOX 316 L/$ZrO_2$/$TiO_2$.

Les éléments céramiques poreux sont déposés en couches minces sur une matrice d'inox. Bien qu'isolé électriquement des deux électrodes de la cellule, le champ électrique qui traverse la solution génère un phénomène de polarisation secondaire sur la partie conductrice de la membrane. La membrane fonctionne alors comme une double électrode polarisée anodiquement dans le compartiment cathodique et inversement dans l'autre compartiment. Les inventeurs ont observé qu'un film se déposait sur la face conductrice de la membrane au risque de la boucher au cours du temps. Par conséquent, l'utilisation de ce type de membrane a été mis de côté dans cet exemple.

Les secondes membranes utilisées sont: totalement polymères. Bien que mécaniquement plus fragiles, elles sont utilisables dans nos conditions. Elles sont composées d'un revêtement de type fluoré poreux (poly 1,2-difluoroéthylène) déposé sur un support en polypropylène. Le diamètre des pores a été abaissé à 0,025 micromètres.

L'utilisation des membranes ralentit la diffusion du monomère mais ne la bloque pas totalement. En conséquence, les problèmes de blocage de la contre-électrode persistent même s'ils sont: largement atténués.

3.2.2. Etudes visant à l'augmentation de l'épaisseur des films de P4VP

a. Réticulation par la divinylbenzène

La démarche présentée dans ce paragraphe répond au besoin d'obtenir des films de P4VP plus épais. En effet, les épaisseurs de film typiquement obtenues sont asymptotiquement observées vers 100 à 150 nm au-delà de 2000 pulses. Pour des situations où les teneurs en cuivre seraient plus élevées, l'épaisseur des films qui se traduit en terme de capacité de capture peut devenir un paramètre important.

Certaines chaînes de polymères sont éliminées au cours du premier lavage à l'ammoniaque. Cette situation provient du fait que toutes les chaînes de polymères ne sont pas greffées sur la surface. Une proportion importante est simplement retenue dans la partie greffée par des interactions faibles ou des situations d'enchevêtrement par interdiffusion. Une dernière partie est simplement libérée dans la solution et contribue à une gélification progressive de l'électrolyte.

La démarche suivie consiste à retenir cette dernière partie dans le film en croissance par l'ajout dans l'électrolyte de molécules polymérisables difonctionnelles. La molécule de divinyl benzène (DVB) peut par exemple permettre de réticuler entre elles des chaînes initialement isolées et par conséquent de retenir une proportion plus importante de chaînes.

Des essais ont été réalisés entre 1 et 10% de DVB ajouté dans le compartiment cathodique. Les épaisseurs croissent jusqu'à une teneur de 5% puis se stabilisent. Les valeurs maximales obtenues sont proches de 5000.

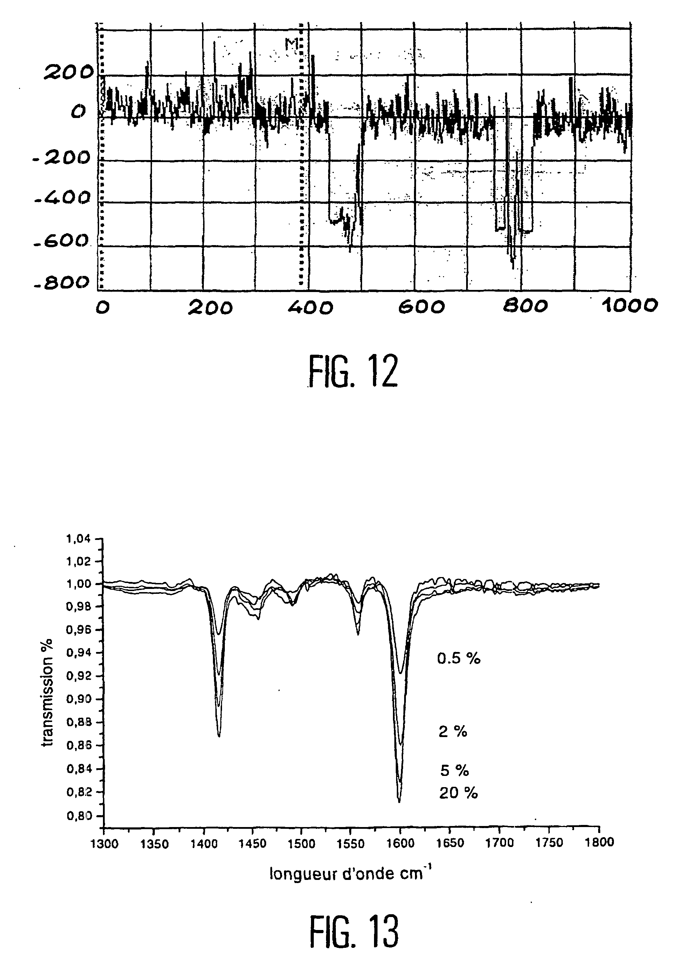

Il a donc été possible de multiplier par 5 les épaisseurs des films. Les résultats sont visibles sur la figure 12.

La figure 13 présente les spectres IRRAS enregistrés sur ces films. Il faut remarquer que les intensités IR dans nos conditions d'analyse en réflexion rasante ne sont pas linéaire avec l'épaisseur des films.

Il est fondamental de remarquer que tous ces films fixent toujours correctement le cuivre. La DVB n'a pas modifié leur aptitude à être gonflés par les solutions aqueuses.

L'utilisation d'agents réticulants, comme la divinyl benzène (DVB), permet donc d'augmenter d'un facteur 5 les épaisseurs de film greffé. L'aptitude à la complexation par le film réticulé est préservée. On n'observe plus, sur ces films réticulés, les pertes d'épaisseurs initialement observées sur les films non réticulés.

b. Incorporation d'oligomères préformés

L'idée d'utiliser des oligomères préformés pour contribuer à augmenter l'épaisseur des films provient d'observations faites au cours de séries de synthèse. Il a été en effet observé, lorsque plusieurs films sont fabriqués successivement (sans DVB), une augmentation de la viscosité de la solution de synthèse, en générale accompagnée par une coloration brun-rouge. Cette observation est liée à la formation de chaînes d'oligomères en solution qui ne sont pas retenues par les films greffés et qui s'accumulent au cours du temps. Parallèlement, il a été observé que l'épaisseur des films a une tendance à croître d'un film à l'autre lorsque l'on utilise la même solution pour des synthèses successives. Les oligomères en solution participent positivement à l'épaississement des films.

Les inventeurs ont aussi utilisé des solutions ayant naturellement polymérisé au cours de leur stockage en boîte à gants. En effet, l'opération de distillation du monomère élimine tout ou partie du stabilisant, c'est-à-dire de l'inhibiteur de polymérisation.

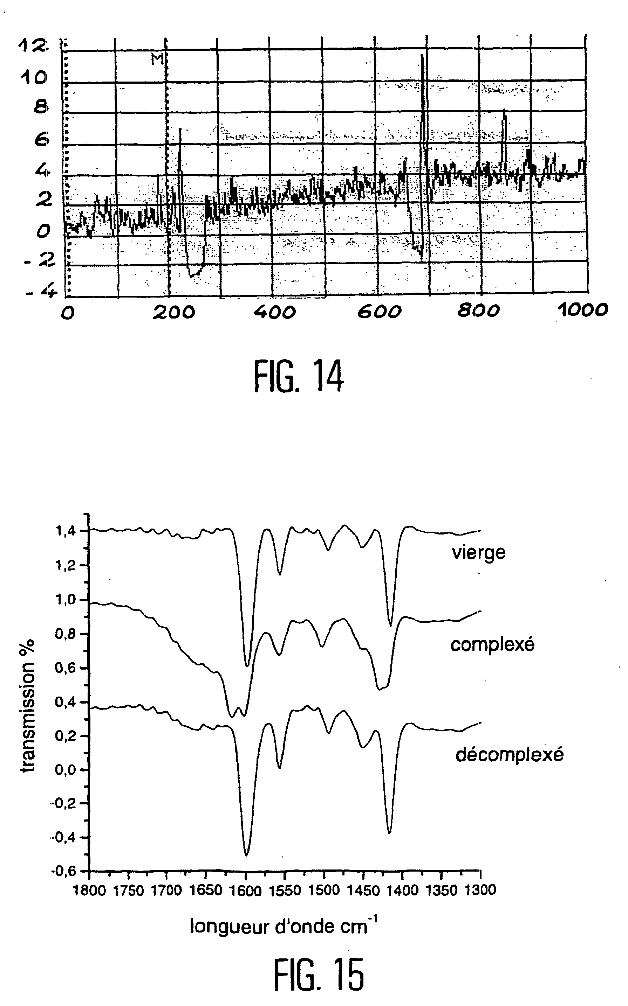

Cet essai a été positif : la préparation d'une solution de synthèse avec des oligomères préformés a permis d'augmenter significativement l'épaisseur des films. Un facteur deux à trois est en moyenne observé en termes d'épaisseur. Des valeurs déterminées par profilométrie de 400 à 500 nm ont régulièrement été observées. La figure 14 illustre ces résultats.

3.2.3. Synthèses sur toiles métalliques

L'utilisation de la cellule en Téflon a permis de commencer les essais sur des toiles métalliques INOX. Le passage de surfaces de nickel radiofréquence, sur lesquelles la plupart des optimisations des conditions de synthèse ont été réalisées, aux toiles d'INOX n'a apparemment posé aucun problème comme illustré sur la figure 15. La présence d'oxydes de chrome ne semble pas avoir diminué la stabilité des films.

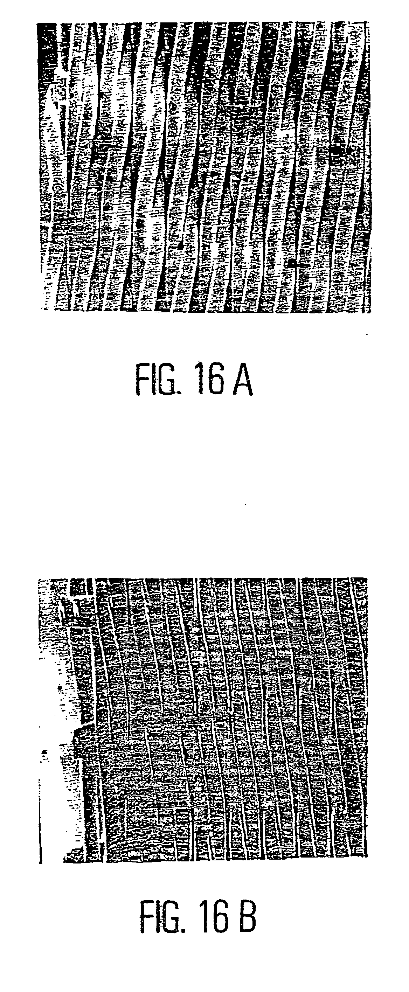

Il a même été possible de soumettre les toiles revêtues aux ultrasons pendant des durées beaucoup plus élevées afin de vérifier leur adhérence. Des tests de 15 mn sous ultrasons dans des solvants du polymère n'ont pas modifié ni altéré visuellement les films. Les observations optiques à la binoculaire ou par MEB (figure 16) montrent des dépôts parfaitement homogènes sur l'ensemble des fils. Ceci confirme bien que le procédé de revêtement par électropolymérisation est tout à fait adapté à ces géométries complexes.

Le passage à ces surfaces développées s'inscrit parfaitement dans l'objectif de diminuer les durées de l'étape de complexation. Si d'un point de vue strictement géométrique, et par extrapolation des résultats obtenus sur lames planes, une toile d'un diamètre de 10 cm permet de purifier 1 litre de solution à 10 mg/l, il est évident que la cinétique ne permettra pas d'atteindre aisément de telles performances.

Un passage au travers de nombreuses toiles peut alors être utilisé pour augmenter considérablement la surface d'échange entre le liquide et la surface des films.

**4) Dispositif de traitement en continu d'un effluent à traiter**

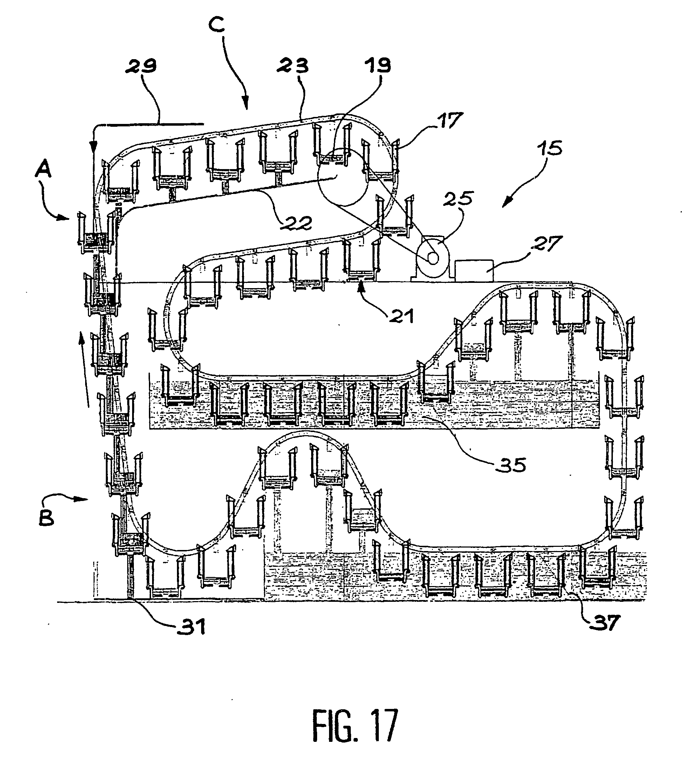

Ce mode de réalisation est schématisé sur les figures 17, 18 et 19. Sur ces figures, les mêmes références indiquent les mêmes objets. Sur la figure 17, le dispositif 15 comprend une série de godets 17 dans lesquels sont placées des grilles 19 formant la structure complexante selon l'invention. Les godets sont percés en leur fond d'un trou 21.

Le dispositif comprend également un rail 23 d'entraînement des godets 17 pour former une noria et un moteur d'entraînement 25 du rail muni d'un variateur 27. Une conduite d'alimentation 29 alimente le dispositif en effluent à traiter au niveau A de la noria. L'effluent traité est évacué des godets au niveau A, B et C de la noria et du dispositif au niveau B. L'effluent traité 31 sort du dispositif en bas à gauche sur ce schéma. Une gouttière de récupération 22 de l'effluent sortant par le fond des godets est prévue au niveau C de la noria. Le dispositif comprend également un premier bain de vidange/décomplexation 35 et un deuxième bain de vidange/décomplexation 37.

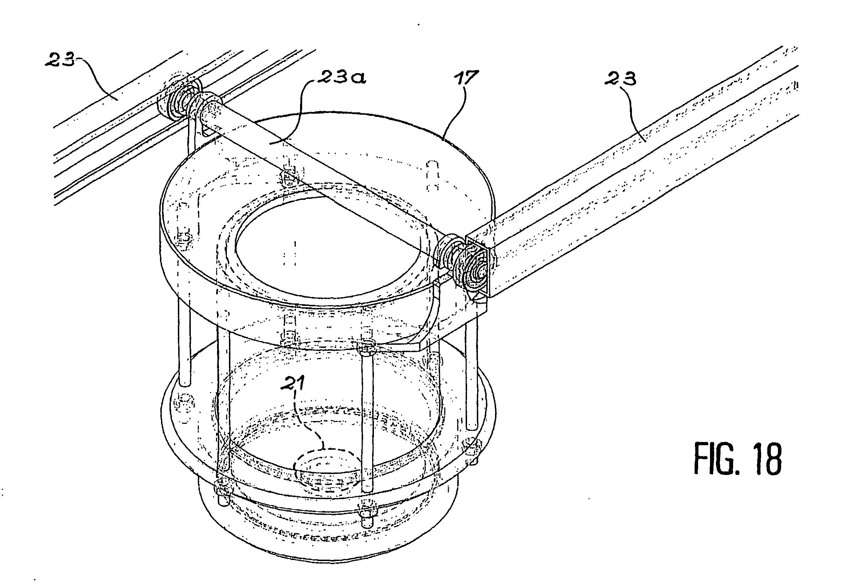

La figure 18 est un schéma d'une vue en perspective d'un godet 17 du dispositif représenté sur la figure 17, sur son rail d'entraînement 23. Le godet est percé en son fond d'un trou 21.

Il est monté de manière pivotante dans sa partie supérieure autour d'un axe 23a sur le rail d'entraînement 23 de manière à se déplacer avec celui-ci en étant dans sa position "trou 21 en bas" tout le long de la noria.

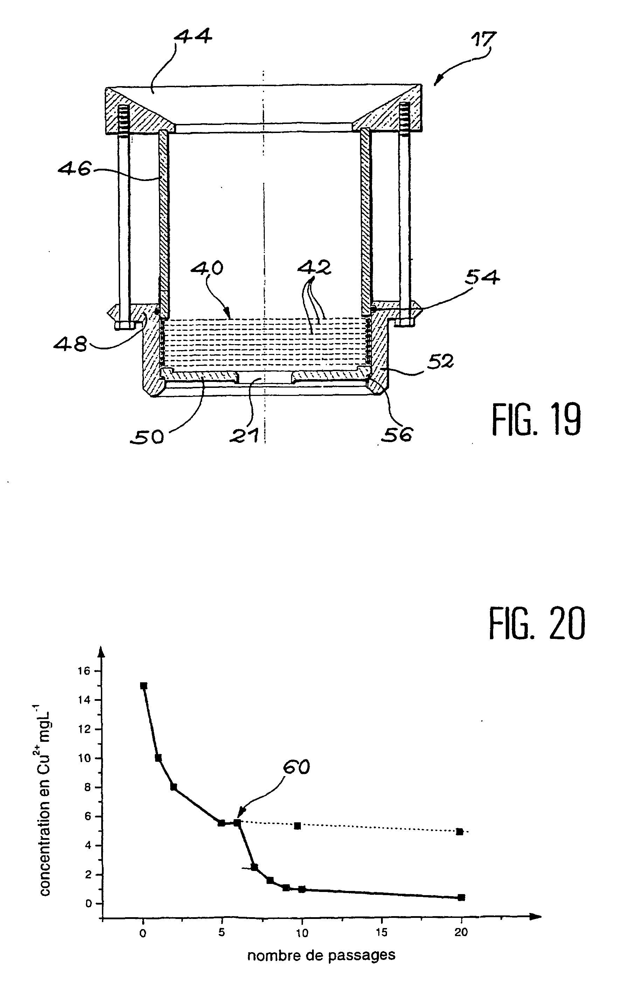

La figure 19 représente un schéma d'une vue en coupe d'un godet 17. Sur ce schéma est représenté le positionnement de la structure complexante 40 selon la présente invention. Cette structure est sous la forme de grilles 42. Chaque godet peut contenir par exemple 10 à 15 grilles. Ici, le godet en contient 10.

Le godet construit pour ce mode de réalisation comprend une couronne supérieure 44, un tube 46, une couronne inférieure 48, un fond 50 muni du trou 21, des écrous 52, un joint torique 54, et un joint torique 56. Le trou permet l'écoulement de l'effluent qui aura traversé les grilles 40.

Sur la figure 17, le dispositif est représenté de telle manière que la noria circule en continu dans le sens des aiguilles d'une montre. En fait, il tourne dans le sens inverse du sens d'écoulement de l'effluent entrant au niveau A et trempe ensuite dans deux bains de vidange/décomplexation.

Ainsi, l'effluent à traiter est introduit dans le dispositif au niveau A en haut à gauche de la noria schématisée, par la partie supérieure du godet se trouvant sous la conduite d'alimentation. L'effluent traverse la structure complexante selon l'invention présente dans le godet et sort du godet par le trou 21. La gouttière 22 a pour rôle de récupérer l'effluent traité qui s'écoule encore des godets dans la partie haute C du dispositif. Les godets sont ensuite entraînés vers les premier 35 et deuxième 37 bains de vidange/décomplexation qui permettent de régénérer les grilles des godets formant la structure complexante selon l'invention.

**5) Exemple d'application utilisant le mode de réalisation du dispositif selon l'invention exposé dans l'exemple 4) précédent**

Le godet réalisé pour cet exemple permet ici de placer en régime transverse un ensemble de 7 toiles en inox 316L qui forment le substrat de la structure complexante selon l'invention, modifiées par un revêtement de poly-4-vinyl pyridine qu.i forme le film de polymère organique électriquement neutre capable de complexer des ions. Les surfaces réelles totales de cette structure complexante sont alors élevées et de l'ordre de 5200 cm$^2$ (ou 0,52 m$^2$). Elles permettent de gagner énormément en efficacité : temps et concentration limite.

Les inventeurs ont fait passer une solution de 250 ml d'effluent à traiter de concentration 15 mg Cu$^{2+}$/l à travers les grilles du godet et ils ont déterminé la concentration de la solution en ion Cu$^{2+}$ en fonction du nombre de passage dans un godet.

Les résultats de cet essai ont permis de tracer le graphique représenté sur la figure 20.

Cette figure représente l'évolution de la concentration de l'effluent en cuivre en fonction du nombre de passage dans le godet avec un volume d'effluents de 250 ml.

Sur cette figure, la référence 60 indique la décomplexation. Au sixième passage, les inventeurs ont décomplexé les grilles au moyen d'ammoniac, puis réutilisé le même godet après un passage d'une eau propre pour rincer l'ammoniac. Ils ont observé que les capacités de complexation du godet ont été restaurées, ce qui a permis d'atteindre de très basses concentrations résiduelles dans l'effluent traité en un faible nombre de passages : de l'ordre de 0,5 mgCu$^{2+}$/l après 20 passages et une seule décomplexation au sixième passage. Le seuil préfectoral du cuivre est, rappelons-le, de 2 mg/l.

L'allure de la courbe montre que l'on peut très probablement obtenir un résultat identique ou meilleur en opérant un plus grand nombre de décomplexations, par exemple une deuxième décomplexation vers le douzième passage.

Ces résultats montrent que la présente invention permet avantageusement de remplacer une complexation longue et quantitative de l'art antérieur par une série de complexations/décomplexations rapides.

**6) Exemple d'utilisation d'une cavité complexante de type verrou redox**

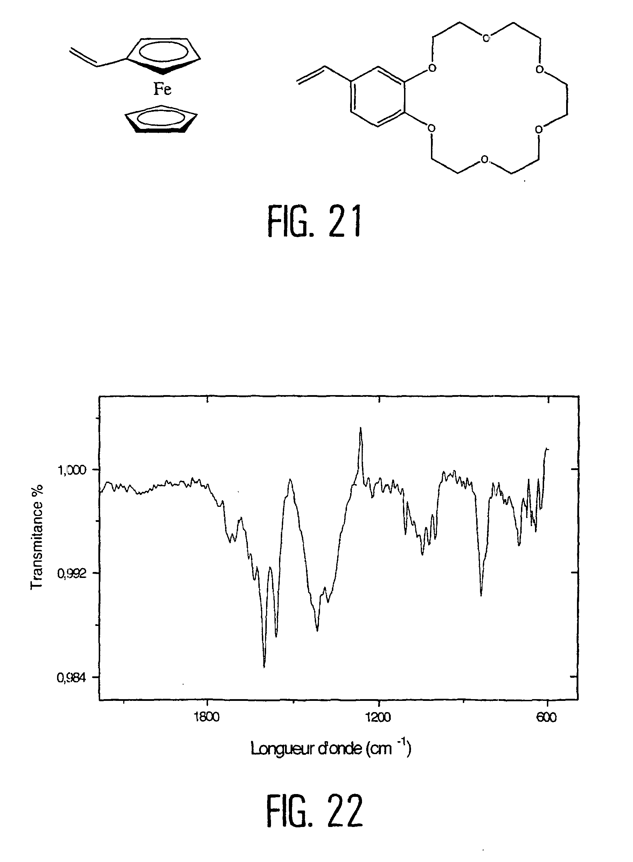

Dans cet exemple d'application, on réalise l'électropolymérisation de vinyl ferrocène seul par polarisation cathodique. Le vinyl ferrocène est schématisé sur la figure 21. Cette expérience permet de vérifier que le mime de verrou redox constitué par le groupement ferrocène est stable chimiquement face à une électropolymérisation cathodique et qu'il peut encore être piloté électrochimiquement lorsqu'il est dans le film de polymère qui a été greffé.

Conditions de synthèse électrochimique :

- Sur lame de platine,
- Référence : électrode d'argent,
- Solvant : acétonitrile,
- Electrolyte support :

TEAP $5.10^{-2}$ mol.L$^{-1}$,

- Concentration en monomère : 1 g dans 20 mL d'acétonitrile soit 0,27 mol.L$^{-1}$,

- Electrolyse pulsée, à l'aide du protocole suivant :

$V_{on}$ = -2.7 V/(Ag$^+$/Ag) $t_{on}$ = 200 ms
$V_{off}$ = 0 V/ (Ag$^+$/Ag) $t_{off}$ = 400 ms
Nombre de pulses : 2000

Le film obtenu a une épaisseur d'environ 20 nm, et présente les structures IR caractéristiques du groupement ferrocène.

La figure 22 annexée représente le spectre IRRAS, transmitance en fonction de la longueur d'onde, du film de poly-(vinl-ferrocène) obtenu par greffage par électropolymérisation sous polarisation cathodique. La réponse du film de poly-(vinyl ferrocène) est mesurée dans une solution d'acétonitrile et TEAP.

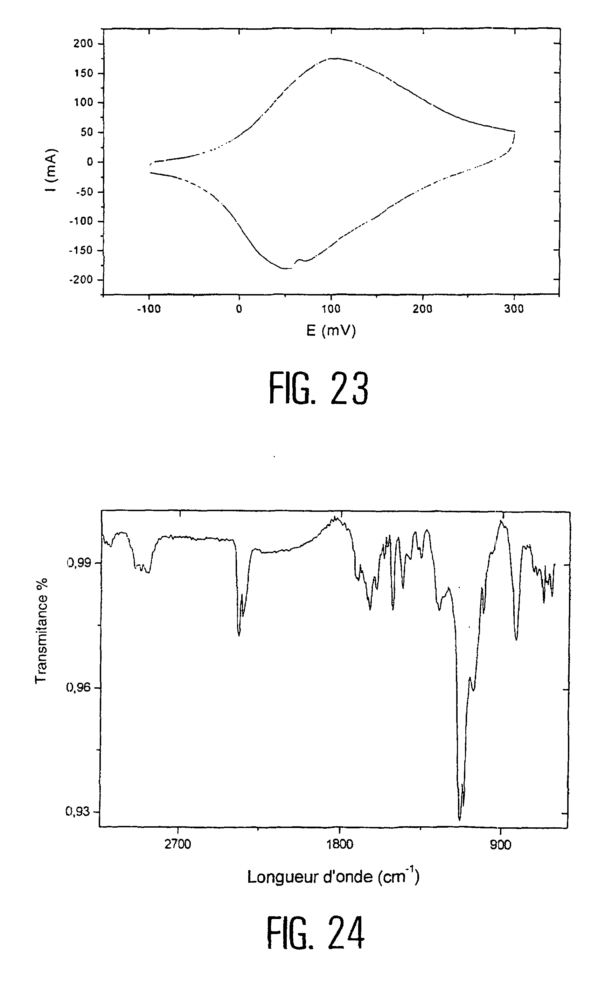

La figure 23 représente la réponse voltammétrique de 20 nm de poly-(vinyl ferrocène) greffé sur platine par électropolymérisation sous polarisation cathodique. La mesure est effectuée dans une solution de TEAP 5.10$^{-2}$ mol. L$^{-1}$ dans l'acétonitrile, v = 100 mV.s$^{-1}$. On observe les pics anodique et cathodique caractéristiques du couple redox toujours réversible associé au groupement ferrocène.

**7) Exemple d'utilisation d'une cavité complexante de type verrou redox**

Dans cet exemple, on a réalisé la copolymérisation du vinyl ferrocène, et du 4-vinyl benzo 18-couronne-6. Cette expérience permet de constater que le verrou redox est co-polymérisable avec des monomères fonctionnalisé par des cavités de complexation et répond électrochimiquement dans un tel film co-polymérisé.

Conditions de synthèse électrochimique :

- Sur lame de platine,
- Concentrations en monomères : 0,5 g de vinyl-ferrocène et 0,75 g de 4-vinyl benzo 18-couronne-6 dans 20 mL d'acétonitrile, soient 0,24 mol.L$^{-1}$ en monomère,
- Electrolyse pulsée, selon le protocole suivant :

$V_{on}$ = -2.7 V/(Ag$^+$/Ag) $t_{on}$ = 200 ms
$V_{off}$ = 0 V/(Ag$^+$/Ag) $t_{off}$ = 400 ms
Nombre de pulses : 2000

L'échantillon est rincé aux ultrasons dans l'acétonitrile avant caractérisation. Le film obtenu a une épaisseur d'environ 40 nm. Sa structure moléculaire révèle les groupements caractéristiques du ferrocène et de l'éther-couronne.

La figure 24 annexée est une représentation d'un spectre IRRAS du film selon l'invention d'un copolymère de vinyl-ferrocène et de 4-vinyl benzo 18-couronne-6 obtenu.

**Exemple 8**

Une cartouche de complexation est réalisée à l'aide d'un tube en polyéthylène, ouvert à une extrémité, et comportant un robinet de réglage d'écoulement à l'autre extrémité. Ce tube est rempli de grilles en inox sur lesquelles on a greffé un film de poly-4-vinyl pyridine. Ces grilles sont placées dans le tube perpendiculairement à la direction du tube. On peut ensuite faire couler l'effluent à traiter dans le tube rempli, régler l'écoulement avec le robinet, et: récupérer une eau à traiter dans le tube rempli, régler l'écoulement avec le robinet, et récupérer une eau traitée au bas du tube, comme illustré sur la figure 20. Après n passages, n dépendant de la concentration de l'effluent d'entrée, les grilles sont régénérées : (i) soit en faisant couler dans le tube une solution d'ammoniac ; (ii) soit en plongeant le tube complet dans une solution d'ammoniac ; (iii) soit en régénérant les grilles de façon électro-assistée. Les résultats obtenus sont équivalents à ceux des exemples précédents.

**Exemple 9**

Une cartouche de complexation est réalisée à l'aide d'un tube en polyéthylène ouvert à une extrémité, et comportant un robinet de réglage d'écoulement à l'autre extrémité. Préalablement, on réalise le greffage de poly-4-vinyl pyridine sur des billes d'inox d'un diamètre de 1 mm. Ce greffage est obtenu en remplissant un tube grillagé en Téflon (marque déposée) avec les billes, le tube étant bouché aux deux extrémités par une grille conductrice comprimant les billes. Le tout est plongé dans la solution de synthèse contenant la 4-vinyl pyridine, et le greffage a lieu comme il est décrit dans les exemples précédents. On remplit ensuite le tube de polyéthylène avec les billes. On peut ensuite faire couler l'effluent à traiter dans le tube rempli, régler l'écoulement avec le robinet, et récupérer une eau traitée au bas du tube. Après n passages, n dépendant de la concentration de l'effluent d'entrée, les billes sont régénérées : (i) soit en faisant couler dans le tube une solution d'ammoniac ; (ii) soit en y plongeant une électrode permettant le relargage électro-assisté. Les résultats obtenus sont équivalents à ceux des exemples précédents.

**Revendications**

1. Structure complexante **caractérisée en ce qu'**elle comprend un substrat conducteur ou semi-conducteur sur lequel est greffé, de façon covalente par électropolymérisation, un film isolant électrique d'un polymère, ou d'un copolymère organique, l'électropolymérisation pour greffer le film ayant été réalisée en présence d'un agent réticulant ajouté, ledit film comprenant une ou plusieurs cavité(s) complexante(s) de type verrous redox, ladite structure étant capable de complexer des ions puis de les expulser par voie électrochimique au moyen desdites cavités complexantes.

2. Structure selon la revendication 1, dans laquelle le polymère organique électriquement neutre greffé sur le substrat comprend en outre un ou plusieurs groupe(s) fonctionnel(s) identique(s) ou différent(s) présentant des propriétés complexantes choisi(s) parmi les amines, les amides, les éthers, les carbonyles, les phosphines, les oxydes de phosphines, les thio-éthers, les disulfures, les urées, les éther-couronnés, les aza-couronnes, les thio-couronnes, les cryptands, les sépulcrands, les podands, les porphyrines, les calixarènes, les pyridines, les bipyridines, les terpyridines, les quinoléines, les composés de l'orthophénantroline, les naphtols, les iso-naphtols, les thiourées, les sidérophores, les antibiotiques, l'éthylène glycol, les cyclodextrines, ainsi que les structures moléculaires substituées et/ou fonctionnalisées à partir de ces groupes fonctionnels.

3. Structure selon la revendication 1, dans laquelle le polymère est un polymère vinylique.

4. Structure selon la revendication 1, dans laquelle le film de polymère ou de copolymère organique est un copolymère du méthyle méthacrylate et du méthyle méthacrylate dans lequel le groupement méthyle de l'ester a été remplacé par un éther couronne muni d'un verrou redox.

5. Structure selon la revendication 1, dans laquelle le film de polymère ou de copolymère organique est un copolymère de la 4-vinyl pyridine et de vinyle ferrocène ou de vinyle diferrocène.

6. Structure selon la revendication 1 ou 3, dans laquelle le film comprend en outre des oligomères préformés.

7. Structure selon la revendication 1, dans laquelle le film de polymère organique a une épaisseur inférieure ou égale à environ 10 µm.

8. Structure selon la revendication 1, dans laquelle le substrat est choisi parmi une plaque, une lame, un ruban, une toile, une grille, un fil, une bille, une poudre, un copeau et un tube.

9. Structure selon les revendications 1 ou 8, dans laquelle le substrat est constitué en tout ou partie d'un matériau conducteur ou semi-conducteur de l'électricité.

10. Structure selon la revendication 1 ou 9, dans laquelle le substrat est en inox 316L.

11. Procédé de fabrication d'une structure selon la revendication 1 comprenant une étape de greffage de façon covalente par électropolymérisation, sur un substrat conducteur ou semi-conducteur, d'un film isolant électrique d'un polymère, ou d'un copolymère, organique comprenant une ou plusieurs cavité(s) complexante(s) de type verrous redox, ladite électropolymérisation étant réalisée avec une solution électrolytique comprenant un mélange du ou des monomère(s) précurseur(s) dudit film de polymère ou copolymère, et de monomères fonctionalisés avec une cavité complexante de type verrous redox, ladite solution électrolytique comprenant en outre un agent réticulant ajouté.

12. Procédé selon la revendication 11, dans lequel l'électrogreffage est réalisé en présence d'oligomères préformés.

13. Procédé selon la revendication 11, dans lequel l'électrogreffage est réalisé dans les conditions suivantes :

    - concentration en monomère : 50% dans l'acétonitrile,

- électrolyse pulsée $V_{on}$ : -2, 8 V (Ag$^+$/Ag)
  $V_{off}$ : O V (Ag$^+$/Ag)
- nombre de pulse $t_{on}$ : 200 ms
  1000 à 4000 $t_{off}$ : 400 ms.

14. Procédé de traitement d'un effluent liquide pour en extraire des ions, ledit procédé comprenant une étape de mise en contact de l'effluent à traiter avec une structure complexante, selon l'une quelconque des revendications 1 à 10 ladite mise en contact étant réalisée de manière à ce quelles ions à extraire soient complexés par ledit film de polymère organique électriquement neutre.

15. Procédé selon la revendication 14, comprenant en outre une étape d'expulsion des ions complexés par le polymère, ladite expulsion étant réalisée par voie chimique, ou par voie électro-assistée.

16. Procédé selon la revendication 15, dans lequel l'expulsion des ions complexés étant réalisée par voie chimique, elle est réalisée par trempage du film de polymère organique dans une solution comprenant un ligand ayant une forte affinité pour les ions complexés par le film.

17. Procédé selon la revendication 15, dans lequel le film étant un film de poly-4-vinyl pyridine, les ions à extraire de l'effluent étant des ions du cuivre et/ou du zinc, l'expulsion de ces derniers du film est réalisé par une méthode utilisant de l'eau chaude, par une méthode utilisant des solutions d'ammoniac, ou par une combinaison de ces deux méthodes.

18. Procédé selon la revendication 15, dans lequel l'expulsion des ions complexés est réalisée par voie électro-assistée en polarisant électriquement le substrat conducteur ou semi-conducteur qui supporte le film de polymère.

19. Procédé selon la revendication 14, comprenant en outre une étape de pelage du substrat pour en retirer le film de polymère ayant complexé les ions, suivie éventuellement d'une étape de dépôt d'un nouveau film de polymère sur le substrat.

20. Dispositif de traitement en continu d'un effluent à traiter comprenant :

    - une structure complexante selon l'une quelconque des revendications 1 à 9,
    - un premier conteneur destiné à contenir l'effluent à traiter dans lequel se trouvent des ions à extraire,
    - un deuxième conteneur destiné à contenir une solution d'expulsion des ions complexés par le polymère de ladite structure, et
    - un moyen pour faire passer en continu, à une vitesse commandée, ladite structure successivement dans le premier conteneur contenant l'effluent à traiter puis dans le deuxième conteneur contenant la solution d'expulsion des ions complexés par le polymère de la structure complexante.

21. Dispositif selon la revendication 20, dans lequel la structure est un ruban refermé sur lui-même.

22. Dispositif selon la revendication 20, dans lequel la structure complexante est un ensemble de grillés disposées dans des godets, lesdits godets étant entraînés par un système de noria.

23. Dispositif selon la revendication 20, comprenant en outre un moyen de commande permettant d'ajuster la vitesse de passage de la structure dans le premier conteneur puis dans le deuxième conteneur en fonction d'un débit de l'effluent à traiter et/ou d'une concentration des ions dans l'effluent à traiter, et/ou en fonction de la vitesse de complexation et de décomplexation des ions par le film organique.

24. Dispositif de traitement en continu d'un effluent à traiter comprenant :

    - une structure complexante selon l'une quelconque des revendications 1 à 9,
    - un premier conteneur destiné à contenir l'effluent à traiter dans lequel se trouvent des ions à extraire, et
    - un moyen pour faire passer en continu, à une vitesse de commande et à partir du premier conteneur, l'effluent à traiter à la surface de ou à travers ladite structure complexante contenant l'effluent à traiter.

25. Utilisation d'une structure selon la revendication 1 pour le traitement d'un effluent comportant des ions radioactifs.

**26.** Cartouche de complexation dans laquelle est disposée une structure complexante selon la revendication 1.

**Patentansprüche**

**1.** Komplexbildende Struktur, **dadurch gekennzeichnet, dass** sie ein elektrisch leitendes oder halbleitendes Substrat umfasst, auf das kovalent durch Elektropolymerisation ein elektrisch isolierender Film aus einem organischen Polymer oder Copolymer aufgepfropft ist, wobei die Elektropolymerisation zum Aufpfropfen des Films in Gegenwart eines zugesetzten Vernetzungsmittels durchgeführt worden ist und der Film ein oder mehrere komplexbildende Hohlräume vom Redox-Abschluss-Typ umfasst, wobei die Struktur in der Lage ist, mittels der komplexbildenden Hohlräume Ionen komplex zu binden und sie dann auf elektrochemischem Wege freizusetzen.

**2.** Struktur nach Anspruch 1, in der das elektrisch neutrale organische Polymer, das auf das Substrat aufgepfropft ist, außerdem umfasst eine oder mehrere gleiche oder unterschiedliche funktionelle Gruppen, die komplexbildende Eigenschaften aufweisen, ausgewählt aus der Gruppe der Amine, der Amide, der Ether, der Carbonyle, der Phosphine, der Phosphinoxide, der Thioether, der Disulfide, der Harnstoffe, der Kronenether, der Kronenaza-Verbindungen, der Kronenthio-Verbindungen, der Cryptanden, der Sepulgranden, der Podanden, der Porphyrine, der Calixarene, der Pyridine, der Bipyridine, der Terpyridine, der Chinoline, der o-Phenantrolin-Verbindungen, der Naphtole, der Isonaphtole, der Thioharnstoffe, der Siderophoren, der Antibiotika, Ethylenglycol, der Cyclodextrine sowie der von diesen funktionellen Gruppen abgeleiteten substituierten und/oder funktionalisierten Molekülstrukturen.

**3.** Struktur nach Anspruch 1, in welcher das Polymer ein Vinylpolymer ist.

**4.** Struktur nach Anspruch 1, in welcher der organische Polymer- oder Copolymerfilm ein Copolymer von Methylmethacrylat und Methylmethacrylat ist, in dem die Methylestergruppe durch einen Kronenether ersetzt ist, der mit einem Redox-Verschluss ausgestattet ist.

**5.** Struktur nach Anspruch 1, in welcher der organische Polymer- oder Copolymerfilm ein Copolymer von 4-Vinylpyridin und Vinylferrocen oder Vinyldifferrocen ist.

**6.** Struktur nach Anspruch 1 oder 3, in welcher der Film außerdem vorher hergestellte Oligomere umfasst.

**7.** Struktur nach Anspruch 1, in welcher der organische Polymerfilm eine Dicke von ≤ etwa 10 μm hat.

**8.** Struktur nach Anspruch 1, in welcher das Substrat ausgewählt ist aus einer Platte (Scheibe), einer Lamelle, einem Band, einem Gewebe (Netz), einem Gitter, einem Faden, einer Kugel, einem Pulver, einem Span (Splitter) und einem Rohr.

**9.** Struktur nach den Ansprüchen 1 oder 8, in der das Substrat vollständig oder teilweise besteht aus einem elektrisch leitenden oder halbleitenden Material.

**10.** Struktur nach Anspruch 1 oder 9, in der das Substrat aus Inox 316L besteht.

**11.** Verfahren zur Herstellung einer Struktur nach Anspruch 1, das die kovalente Aufpfropfung eines elektrisch isolierenden Films aus einem organischen Polymer oder Copolymer, der ein oder mehrere komplexbildende Hohlräume vom Redox-Verschluss-Typ durch Elektropolymerisation umfasst, wobei die Elektropolymerisation mit einer elektrolytischen Lösung, die eine Mischung aus dem oder den Vorläufer-Monomer(en) des Polymer- oder Copolymer-Films und Monomeren, die mit einem komplexbildenden Hohlraum vom Redox-Verschluss-Typ funktionalisiert sind, durchgeführt wird, wobei die elektrolytische Lösung außerdem ein zugesetztes Vernetzungsmittel enthält.

**12.** Verfahren nach Anspruch 11, bei dem die Elektroaufpfropfung in Gegenwart von vorher hergestellten Oligomeren durchgeführt wird.

**13.** Verfahren nach Anspruch 11, bei dem die Elektroaufpfropfung unter den folgenden Bedingungen durchgeführt wird:

- Monomer-Konzentration: 50 % in Acetonitril,
- Impulselektrolyse $V_{ein}$ = -2,8 V (Ag$^+$/Ag)

$V_{aus}$ = O V (Ag$^+$/Ag)
- Impulsnummer 1000 bis 4000      $t_{ein}$ = 200 ms
  $t_{aus}$ = 400 ms

14. Verfahren zum Behandeln eines flüssigen Abstroms, um Ionen daraus zu extrahieren, wobei das Verfahren umfasst das Inkontaktbringen des zu behandelnden Abstroms mit einer komplexbildenden Struktur nach einem der Ansprüche 1 bis 10, wobei das Inkontaktbringen in der Weise durchgeführt wird, dass die zu extrahierenden Ionen durch den Film aus einem elektrisch neutralen organischen Polymer komplex gebunden werden.

15. Verfahren nach Anspruch 14, das außerdem die Freisetzung der komplex gebundenen Ionen durch das Polymer umfasst, wobei die Freisetzung Austreibung auf chemischem oder elektrisch unterstütztem Wege durchgeführt wird.

16. Verfahren nach Anspruch 15, bei dem die Freisetzung der komplex gebundenen Ionen, die auf chemischem Wege durchgeführt wird, erfolgt durch Eintauchen des Films aus einem organischen Polymer in eine Lösung, die einen Liganden enthält, der eine starke Affinität für die von dem Film komplex gebundenen Ionen aufweist.

17. Verfahren nach Anspruch 15, in dem der Film ein Poly-4-vinylpyridin-Film ist, die aus dem Abstrom zu extrahierenden Ionen Kupferund/oder Zinkionen sind, wobei die Freisetzung letzterer aus dem Film durchgeführt wird unter Anwendung eines Verfahrens, bei dem warmes Wasser verwendet wird, unter Anwendung eines Verfahrens, bei dem Ammoniaklösungen verwendet werden, oder unter Anwendung einer Kombination dieser beiden Verfahren.

18. Verfahren nach Anspruch 15, bei dem die Freisetzung der komplex gebundenen Ionen durchgeführt wird auf elektrisch unterstütztem Wege durch elektrische Polarisation des elektrisch leitenden oder halbleitenden Substrats, das den Polymerfilm trägt.

19. Verfahren nach Anspruch 14, das außerdem das Abziehen des Polymerfilms mit den komplex gebundenen Ionen von dem Substrat und gegebenenfalls das anschließende Abscheiden eines neuen Polymerfilms auf dem Substrat umfasst.

20. Vorrichtung zur kontinuierlichen Behandlung eines zu behandelnden Abstroms, die umfasst:

- eine komplexbildende Struktur nach einem der Ansprüche 1 bis 9,
- einen ersten Behälter, für die Aufnahme des zu behandelnden Abstroms, in dem sich die zu extrahierenden Ionen befinden,
- einen zweiten Behälter, für die Aufnahme einer Lösung zur Freisetzung der komplex gebundenen Ionen durch das Polymer der Struktur, und
- eine Einrichtung zum kontinuierlichen Überführen der Struktur mit einer gesteuerten Geschwindigkeit nacheinander in den ersten Behälter, der den zu behandelnden Abstrom enthält, und dann in den zweiten Behälter, der die Lösung zum Freisetzen der Ionen enthält, die durch das Polymer der komplexbildenden Struktur komplex gebunden sind.

21. Vorrichtung nach Anspruch 20, in der die Struktur ein in sich geschlossenes Band ist.

22. Vorrichtung nach Anspruch 20, in der die komplexbildende Struktur eine Anordnung von Sieben (Gittern) ist, die in Bechern angeordnet sind, die durch ein Paternoster-System transportiert werden.

23. Vorrichtung nach Anspruch 20, die außerdem eine Steuereinrichtung umfasst, welche die Einstellung der Überführungsgeschwindigkeit der Struktur in den ersten Behälter und dann in den zweiten Behälter als Funktion der Durchflussmenge des zu behandelnden Abstroms und/oder der Konzentration der Ionen in dem zu behandelnden Abstrom und/oder als Funktion der Geschwindigkeit der Komplexbildung und der Dekomplexierung der Ionen durch den organischen Film erlaubt.

24. Vorrichtung zur kontinuierlichen Behandlung eines zu behandelnden Abstroms, die umfasst:

- eine komplexbildende Struktur nach einem der Ansprüche 1 bis 9,
- einen ersten Behälter für die Aufnahme des zu behandelnden Abstroms, in dem sich Ionen befinden, die extrahiert werden sollen, und

- eine Einrichtung zum kontinuierlichen Überführen des zu behandelnden Abstroms mit einer geregelten Geschwindigkeit und ausgehend von dem ersten Behälter, zu der Oberfläche der den zu behandelnden Abstrom enthaltenden komplexbildenden Struktur oder durch diese Struktur hindurch.

**25.** Verwendung einer Struktur nach Anspruch 1 zum Behandeln eines Abstroms, der radioaktive Ionen enthält.

**26.** Komplexbildungs-Kartusche, in der eine komplexbildende Struktur nach Anspruch 1 angeordnet ist.

**Claims**

**1.** Complexing structure, **characterized in that** it comprises a conductive or semiconductive substrate on which is covalently grafted by electropolymerization an electrically insulating film of a polymer or an organic copolymer, the electropolymerization for grafting the film being carried out in the presence of an added crosslinking agent, said film comprising one or more complexing cavities of the redox lock type, said structure able to complex ions and then electrochemically expel them by means of said complexing cavities.

**2.** Structure according to claim 1, in which the electrically neutral organic polymer grafted on the substrate also comprises:

- one or more identical or different functional groups having complexing properties chosen from among amines, amides, ethers, carbonyls, phosphines, phosphine oxides, thio-ethers, disulphides, ureas, crown ethers, aza crowns, thio crowns, cryptands, sepulcrands, podands, porphyrines, calixarenes, pyridines, bi-pyridines, terpyridines, quinoleines, compounds of orthophenantroline, naphtols, iso-naphtols, thioureas, siderophores, antibiotics, ethylene glycol, cyclodextrins, and molecular structures substituted and/or functionalized from these functional groups.

**3.** Structure according to claim 1, in which the polymer is a vinyl polymer.

**4.** Structure according to claim 1, in which the polymer or organic copolymer film is a copolymer of methyl methacrylate and of methyl methacrylate in which the methyl group of the ester has been replaced by a crown ether provided with a redox lock.

**5.** Structure according to claim 1, in which the polymer or organic copolymer film is a copolymer of 4-vinyl pyridine and vinyl ferrocene or vinyl diferrocene.

**6.** Structure according to claim 1 or 3, in which the film also comprises preshaped oligomers.

**7.** Structure according to claim 1, in which the organic polymer film has a thickness of approximately 10 μm or less.

**8.** Structure according to claim 1, in which the substrate is chosen from among a plate, a strip, a tape, a gauze, a mesh, a wire, a bead, a powder, a chipping and a tube.

**9.** Structure according to claim 1 or 8, in which the substrate is formed in whole or in part of an electric conductor or semiconductor material.

**10.** Structure according to claim 1 or 9, in which the substrate is in 316L stainless steel.

**11.** Method for producing a structure according to claim 1 comprising a stage of covalently grafting by electropolymerization onto a conductive or semiconductive substrate of an electrically insulating film of a polymer or an organic copolymer comprising one or more complexing cavities of the redox lock type, said electropolymerization taking place with an electrolytic solution incorporating a mixture of the precursor monomer or monomers of said polymer or copolymer film, and monomers functionalized with a complexing cavity of the redox lock type, said electrolytic solution also incorporating an added crosslinking agent.

**12.** Method according to claim 11, in which electrografting takes place in the presence of preshaped oligomers.

**13.** Method according to claim 11, in which electrografting takes place under the following conditions:

- monomer concentration: 50% in acetonitrile,
- pulsed electrolysis: $V_{on}$: -2.8 V($Ag^+$/Ag), $V_{off}$: 0 V($Ag^+$/Ag),
- pulse number: 1000 to 4000: $t_{on}$: 200 ms, $t_{off}$: 400 ms.

14. Method for treating a liquid effluent to extract ions from said effluent, said method comprising a step to contact the effluent to be treated with a complexing structure according to any of claims 1 to 10, contacting taking place in such a way that the ions to be extracted are complexed by said electrically neutral organic polymer film.

15. Method according to claim 14, also comprising a step to expel the ions complexed by the polymer, said expulsion being conducted by chemical or electro-assisted means.

16. Method according to claim 15, in which the expulsion of the complexed ions being made by chemical means, it is conducted by immersing the film of organic polymer in a solution containing a ligand having strong affinity for the ions complexed by the film.

17. Method according to claim 15, in which the film being a poly-4-vinyl pyridine film, the ions to be extracted from the effluent being copper and/or zinc ions, the expelling of the latter from the film is made with a method using hot water, with a method using ammonia solutions, or with a combination of these two methods.

18. Method according to claim 15, in which the expulsion of the complexed ions is made by electro-assisted means by electrically polarizing the conductor or semiconductor substrate carrying the polymer film.

19. Method according to claim 14, also comprising a substrate peeling step to remove the polymer film which complexed the ions, optionally followed by a depositing step to deposit a new polymer film on the substrate.

20. Continuous treatment device for an effluent to be treated comprising:

- a complexing structure according to any of claims 1 to 9,
- a first container intended to hold the effluent to be treated containing the ions to be extracted,
- a second container intended to hold a solution to expel the ions complexed by the polymer of said structure, and
- means for causing said structure to be continuously passed, at a controlled rate, successively in the first container holding the effluent to be treated and then in the second container holding the solution to expel the ions complexed by the polymer of the complexing structure.

21. Device according to claim 20, in which the structure is a tape with joined ends.

22. Device according to claim 20, in which the complexing structure is an assembly of meshes arranged in buckets, said buckets being driven by a waterwheel system.

23. Device according to claim 20, also comprising control means with which to adjust the speed at which the structure passes through the first container then through the second container in relation to a flow rate of the effluent to be treated and/or to a concentration of ions in the effluent to be treated and/or in relation to the complexing and decomplexing speed of the ions by the organic film.

24. Continuous treatment device for effluent to be treated comprising:

- a complexing structure according to any of claims 1 to 9,
- a first container intended to hold the effluent to be treated containing the ions to be extracted, and
- means for causing the effluent to be treated to pass continuously, at controlled speed and from the first container, over the surface of or through said complexing structure containing the effluent to be treated.

25. Use of a structure according to claim 1 for treating an effluent incorporating radioactive ions.

26. Complexing cartridge in which is placed a complexing structure according to claim 1.

FIG. 1

FIG. 5

FIG. 2 A

FIG. 2 B

FIG. 3 A

FIG. 3 B

FIG. 4

Longueur d'onde cm⁻¹

FIG. 6

FIG. 7

FIG. 8

FIG. 9

FIG. 10 A

FIG. 10 B

FIG. 10 C

EP 1 315 565 B1

DVB

FIG. 11

FIG. 12

FIG. 13

FIG. 14

FIG. 15

FIG. 16 A

FIG. 16 B

FIG. 17

FIG. 18

EP 1 315 565 B1

FIG. 19

FIG. 20

concentration en Cu$^{2+}$ mgL$^{-1}$

nombre de passages

FIG. 21

Longueur d'onde (cm $^{-1}$)

FIG. 22

FIG. 23

FIG. 24

FIG. 25